# EUROPÄISCHE PATENTSCHRIFT

(11) **EP 2 308 164 B1**
(45) Veröffentlichungstag und Bekanntmachung des Hinweises auf die Patenterteilung: **17.10.2018**
(21) Anmeldenummer: 09777284.2
(22) Anmeldetag: 18.07.2009
(51) Int. Cl.: H02M 7/493, B60L 11/18

(54) **SCHALTUNGSANORDNUNG FÜR EINEN ELEKTRISCHEN ANTRIEB**
CIRCUIT ARRANGEMENT FOR AN ELECTRIC DRIVE
DISPOSITIF DE COMMUTATION POUR UN ENTRAÎNEMENT ÉLECTRIQUE

(30) Priorität: 08.08.2008 DE 102008037064
(43) Veröffentlichungstag der Anmeldung: 13.04.2011
(73) Patentinhaber: Bayerische Motoren Werke Aktiengesellschaft, 80809 München (DE)
(72) Erfinder: FRANKE, Torsten, 81479 München (DE)
(86) Internationale Anmeldenummer: PCT/EP2009/005230
(87) Internationale Veröffentlichungsnummer: WO 2010/015322

(56) Entgegenhaltungen:
- WO-A-2006/132052
- DE-A1- 19 954 306
- GB-A- 2 175 155
- JP-A- 2000 125 411
- JP-A- 2007 295 701
- US-A1- 2006 127 704
- US-A1- 2007 222 413

## Beschreibung

Die Erfindung betrifft eine Schaltungsanordnung für einen elektrischen Antrieb sowie ein Kraftfahrzeug umfassend die Schaltungsanordnung.

Für die Elektrifizierung von Fahrzeugen gibt es unterschiedliche Energiespeichersysteme. Gebräuchlich sind beispielsweise Doppelschichtkondensatoren mit hoher Leistungsdichte und geringer Energiedichte, Batterien mit mittlerer Leistungs- und Energiedichte sowie Brennstoffzellensysteme mit niedriger Leistungs- und hoher Energiedichte.

Diese Energiespeichersysteme werden in Hybrid- bzw. Elektrofahrzeugen überwiegend singulär eingesetzt. Es sind Vorschläge bekannt, die die jeweiligen Beschränkungen der Speicher bzgl. Leistungs- und Energiedichte durch Parallel- oder Reihenschaltung unterschiedlicher Speicherarten behandeln. Dabei kann eine Kopplung verschiedener Speicherarten mittels Schalter bzw. leistungselektronischer Ventile in Abhängigkeit des Ladezustandes der einzelnen Speicher gesteuert werden.

Auch gibt es Schaltungen, die Stromkreise unterschiedlicher Spannungsniveaus miteinander verbinden und den Energieaustausch zwischen diesen Stromkreisen beeinflussen. Häufig werden dafür DC-DC-Wandler verwendet.

Bekannte Ansätze haben den Nachteil, dass kein energieeffizienter Betrieb von Kraftfahrzeugen mit nennenswerter Reichweite bei ausschließlich elektrischer Fahrt und in einem Zyklus mit praxisnahen Beschleunigungswerten möglich ist. Fahrzeuge mit Doppelschichtkondensator erreichen hervorragende Beschleunigungswerte bei geringem Speichergewicht und hohem Wirkungsgrad, erlauben jedoch bislang nur wenige hundert Meter elektrische Fahrt. Fahrzeuge mit Batterien ermöglichen mehrere Kilometer elektrische Fahrt; die bei höheren Leistungsumsätzen in den Batterien entstehenden Verluste sind nur mit großem technischen Aufwand (Klimatisierung) beherrschbar und führen zu einem sehr niedrigen Systemwirkungsgrad. Fahrzeuge mit Brennstoffzellenantrieb sind wegen der hohen Leistungskosten und des hohen Leistungsgewichts derzeit nicht wirtschaftlich.

Eine Parallelschaltung von Doppelschichtkondensator und Batterie führt zu einem zusätzlichen Energieumsatz zwischen beiden Speichern (Kreisströme für Ladungsausgleich bei Spannungsasymmetrie) und damit zu einer Verschlechterung des Systemwirkungsgrades.

Eine Reihenschaltung von Kondensatoren und Batterien führt zu einem zusätzlichen Aufwand bei der Ladezustandssteuerung. Beide Speicherarten unterscheiden sich in ihrem Selbstentladungsverhalten. Zur Kompensation ist eine aktive Umladung oder eine Entladung zumindest eines Speicherteiles notwendig, wodurch ebenfalls der Systemwirkungsgrad deutlich eingeschränkt wird.

Aus der WO2006132052 ist ein Leistungsversorgungssystem für elektrische Lasten in einem Kraftfahrzeug bekannt, das zwei Energiespeicher aufweist.

Weiterhin ist aus DE19954306A1 eine Vorrichtung zur Erzeugung elektrischer Energie bekannt mit einer Brennstoffzelle in einem Fahrzeug.

Die **Aufgabe** der Erfindung besteht darin, die vorstehend genannten Nachteile zu vermeiden und insbesondere einen Ansatz zur Entkopplung verschiedener Energiespeicher unter Berücksichtigung möglicher Energieausgleichsvorgänge zu schaffen und insbesondere einen hohen Wirkungsgrad bei der Versorgung eines elektrischen Antriebs anhand mehrerer unterschiedlicher Energiequellen zu gewährleisten.

Diese Aufgabe wird gemäß den Merkmalen des unabhängigen Patentanspruchs gelöst.

Weiterbildungen der Erfindung ergeben sich auch aus den abhängigen Ansprüchen.

Zur Lösung der Aufgabe wird eine Schaltungsanordnung zur Versorgung eines elektrischen Antriebs angegeben
- an die mindestens zwei elektrische Energiequellen anschließbar sind;
- bei der mindestens eine der mindestens zwei elektrischen Energiequellen mittels mindestens eines Stellglieds zumindest zeitweise den elektrischen Antrieb versorgt;
- bei der mindestens eine elektrische Energiequelle mittels eines Schalters von dem elektrischen Antrieb trennbar ist;
- mit zumindest einem Filter;
- wobei der Schalter zwischen Filter und Stellglied geschaltet ist;
- wobei zwischen dem Schalter und dem Stellglied kein weiterer als Spannungsquelle wirkender Energiespeicher geschaltet ist;
- bei der die mindestens eine elektrische Energiequelle eine Batterie und eine Kondensatorquelle umfasst;
- mit einer Vorladeschaltung, die die Batterie und die Kondensatorquelle koppelt.

Hierdurch wird erreicht, dass verschiedene oder mehrere gleichartige elektrische Energiequellen umfassend z.B. elektrische Puffer und/oder elektrische Energiespeicher miteinander zur Versorgung des elektrischen Antriebs kombinierbar sind. Die Energiequellen können sich im Hinblick auf Leistung und/oder Leerlaufspannung deutlich unterscheiden. Vielmehr kann sogar abhängig von den jeweiligen Eigenschaften oder Betriebspunkten der verwendeten elektrischen Energiequellen der elektrische Antrieb versorgt werden.

Der Schalter ist vorzugsweise als ein elektrischer Schalter ausgeführt.

Hierbei sei angemerkt, dass die elektrische Energiequelle auch unterschiedliche elektrische Energiespeicher umfassen kann. Weiterhin sei angemerkt, dass die hierin erwähnten Batterien insbesondere wiederaufladbar sind.

Insbesondere kann es sich bei der elektrischen Energiequelle auch um ein Energienetz, einen Generator, Solarzellen oder Thermoelemente handeln. Ebenfalls ist es möglich, anstelle des elektrischen Antriebs ein anderer elektrischer Verbraucher oder eine andere elektrische Quelle bzw. ein elektrisches Netz mit zumindest leicht induktivem Verhalten verwendet wird; dabei kann das induktive Verhalten inhärent vorhanden oder durch zusätzliche Elemente, z.B. eine Drossel, gegeben sein. Insbesondere ist die Anzahl der Phasen des elektrischen Antriebs (des Verbrauchers oder der Quelle etc.) sowie deren elektrische Grundfrequenz für die Funktionsweise ohne Belang.

Eine Weiterbildung ist es, dass der Schalter ungesteuert ausgeführt ist und insbesondere eine Diode umfasst.

Eine andere Weiterbildung ist es, dass der Schalter ein gesteuerter Schalter ist umfassend mindestens eines der folgenden Bauteile:
- einen Transistor;
- einen IGBT;
- einen FET, insbesondere ein MOSFET;
- einen Thyristor;
- einen Triac;
- einen Dynistor.

Insbesondere ist es eine Weiterbildung, dass mindestens diejenige elektrische Energiequelle mittels des Schalters von dem elektrischen Antrieb trennbar ist, die eine gegenüber den anderen Energiequellen geringere Gleichspannung aufweist.

Bei der Gleichspannung kann es sich um die Leerlaufspannung der elektrischen Energiequelle handeln.

Entsprechend kann diejenige elektrische Energiequelle aus den mindestens zwei elektrischen Energiequellen dauerhaft (also ohne aktiven Schalter) mit dem elektrischen Antrieb verbunden sein, die eine höhere Gleichspannung oder Leerlaufspannung als die anderen elektrischen Energiequellen aufweist.

Auch ist es eine Weiterbildung, dass der elektrische Antrieb eine Elektromaschine umfasst.

Insbesondere kann der elektrische Antrieb mehrere Elektromaschinen aufweisen. Beispielsweise kann die Elektromaschine als eine mehrphasige Elektromaschine ausgeführt sein. Vorzugsweise können eine oder mehrere Elektromaschinen in einem Kraftfahrzeug vorgesehen sein.

Ferner ist es eine Weiterbildung, dass die mindestens zwei elektrischen Energiequellen mit der Schaltungsanordnung in einem Kraftfahrzeug angeordnet sind.

Insbesondere kann der hier vorgeschlagene Ansatz ein Kraftfahrzeug mit Verbrennungsmotor ergänzen.

Im Rahmen einer zusätzlichen Weiterbildung umfasst die elektrische Energiequelle eine der folgenden Energiequellen:
- eine Brennstoffzelle;
- eine Batterie;
- eine Kondensatorquelle, insbesondere eine Doppelschichtkondensatorquelle.

Eine nächste Weiterbildung besteht darin, dass das Stellglied eine Wechselrichterbrücke umfasst. Insbesondere kann die Wechselrichterbrücke (auch bezeichnet als Wechselrichter) dreiphasig ausgeführt sein.

Eine Ausgestaltung ist es, dass für jede elektrische Energiequelle eine Wechselrichterbrücke vorgesehen ist.

Alternativ kann eine einzige Wechselrichterbrücke für die mindestens zwei elektrischen Energiequellen vorgesehen sein.

Eine alternative Ausführungsform besteht darin, dass ein Puffer vorgesehen ist zur Aufnahme und/oder Bereitstellung elektrischer Energie.

Der elektrische Puffer ist vorzugsweise in einem Freilaufpfad angeordnet derart, dass überschüssige Energie insbesondere aus dem elektrischen Antrieb aufgenommen und ggf. verbraucht werden kann.

Insbesondere kann eine der elektrischen Energiequellen als elektrischer Puffer ausgeführt sein.

Eine nächste Ausgestaltung ist es, dass der Puffer eine Spannung aufweist, die im wesentlichen mindestens so groß ist wie die größte Spannung, insbesondere die größte Leerlaufspannung, der elektrischen Energiequellen.

Auch ist es eine Ausgestaltung, dass der Puffer eine Spannung aufweist, die im wesentlichen mindestens so groß ist wie die maximale Spannung an dem elektrischen Antrieb.

Eine Weiterbildung besteht darin, dass der Puffer derart ausgelegt ist, dass er eine in dem elektrischen Antrieb induktiv gespeicherte Energie periodisch aufnimmt und entweder an den elektrischen Antrieb oder an einen anderen Verbraucher abgibt.

Der elektrische Puffer kann als jede mögliche Variante einer elektrischen Energiequelle (z.B. als Kondensator, Batterie, insbesondere in Kombination mit einem Varistor o.ä.) ausgeführt sein.

Eine Ausgestaltung besteht darin, dass mindestens zwei elektrische Energiequellen in Reihe geschaltet sind.

Hierdurch können vorteilhaft unterschiedliche Energiequellen mit verschiedenen Leistungsniveaus genutzt werden.

Eine andere Ausgestaltung ist es, dass die mindestens zwei in Reihe geschalteten elektrischen Energiequellen einzeln oder zusammen aktivierbar sind.

Hierdurch kann mittels der mindestens zwei elektrischen Energiequellen ein Multi-Level-Ansatz für unterschiedliche Spannungen bereitgestellt werden. Je nach Zuschaltung der elektrischen Energiequellen, kann z.B. nur eine Energiequelle oder es können beide Energiequellen aktiv sein. Aktiv bedeutet hier, dass die Energiequelle die Elektromaschine versorgt oder Energie von der Elektromaschine erhält.

Beispielsweise können unterschiedliche Spannungsniveaus für die Elektromaschine bereitgestellt werden, indem in einem ersten Zustand nur einer von zwei Energiespeichern die Elektromaschine mit Energie versorgt und in einem zweiten Zustand beide Energiespeicher die Elektromaschine mit Energie versorgen. Beispielsweise kann der im zweiten Zustand zusätzlich aktivierte Energiespeicher eine hohe Spannung für kurze Zeit bereitstellen, um somit die Grundversorgung des anderen Energiespeichers zu ergänzen (Boost).

Auch ist es eine Weiterbildung, dass die mindestens zwei in Reihe geschalteten elektrischen Energiequellen mittels mindestens eines elektronischen Schalters einzeln oder zusammen aktivierbar sind.

Eine andere Weiterbildung besteht darin, dass ein Wechselschalter vorgesehen ist, anhand dessen zwischen elektrischen Energiequellen umgeschaltet werden kann.

Beispielsweise kann zwischen einer ersten Gruppe von Energiequellen und einer zweiten Gruppe von Energiequellen umgeschaltet werden, wobei jede Gruppe mindestens eine Energiequelle aufweist. Insbesondere wird durch das Umschalten jeweils eine Gruppe aktiviert, die andere Gruppe deaktiviert. Auch ist es möglich, dass der Wechselschalter zwischen mehreren Gruppen von Energiequellen umschaltet (Vielfach-Umschalter).

Zusätzlich ist es eine Weiterbildung, dass mindestens eine elektrische Energiequelle eine monodirektionale Energiequelle ist.

Somit kann die monodirektionale Energiequelle entweder nur zur Versorgung der Elektromaschine vorgesehen sein oder es kann die Elektromaschine nur Energie in die monodirektionale Energiequelle übertragen. Auch ist es möglich, dass eine Energiequelle temporär monodirektional (z.B. durch eine schaltbare Diode) ausgeführt ist.

Es ist eine nächste Weiterbildung, dass die mindestens zwei elektrischen Energiequellen unterschiedliche Spannungen und/oder unterschiedliche Leistungen aufweisen.

Weiterhin wird zur Lösung der genannten Aufgabe ein Kraftfahrzeug angegeben umfassend mindestens einen elektrischen Antrieb und mindestens zwei elektrische Energiequellen sowie die Schaltungsanordnung wie hierin beschrieben.

Ausführungsbeispiele der Erfindung werden nachfolgend anhand der Zeichnungen dargestellt und erläutert.

Es zeigen:
- Fig.1: ein Beispiel für eine Anordnung zum Parallelbetrieb von Energiespeichern OHNE einen Überlappungsbereich der Betriebsspannungen;
- Fig.2: ein Beispiel für eine Anordnung zum Parallelbetrieb von Energiespeichern MIT einem Überlappungsbereich der Betriebsspannungen;
- Fig.3: ein anderes Beispiel für eine Anordnung zum Parallelbetrieb von mehreren Energiespeichern OHNE einen Überlappungsbereich der Betriebsspannungen;
- Fig.4: ein Prinzipschaltbild für den Betrieb einer Elektromaschine mit einer beliebigen Energiequelle und mit einem Puffer;
- Fig.5: eine Anordnung für einen elektrischen Antrieb umfassend eine Brennstoffzelle als Energiequelle und einen SuperCap als Puffer;
- Fig.6: eine Anordnung für einen elektrischen Antrieb mit einer Batterie als Energiespeicher und einem SuperCap als Puffer;
- Fig.7: eine Anordnung für einen elektrischen Antrieb mit einer Brennstoffzelle als Energiequelle, einer Batterie als Energiespeicher, einem SuperCap als Booster und einer Kondensator-Varistor-Kombination als Puffer;
- Fig.8: ein weiteres Beispiel für eine Anordnung zum Parallelbetrieb von mehreren Energiespeichern, wobei in den Wechselrichtern Elemente zur temporären Unterbrechung des Energieflusses integriert sind;
- Fig.9: ein Prinzipschaltbild für den Betrieb einer Elektromaschine mit mehreren Energiequellen (z.B. Energiespeichern), wobei die Energiequellen wahlweise aktivierbar sind;
- Fig.10: ein Prinzipschaltbild für den Betrieb einer Elektromaschine mit mehreren Energiequellen, wobei beispielhaft eine Energiequelle als eine monodirektionale Energiequelle (Senke) ausgeführt ist;
- Fig.11: ein Prinzipschaltbild für den Betrieb einer Elektromaschine mit mehreren Energiequellen, wobei zwischen beiden Energiequellen umgeschaltet werden kann;
- Fig.12: ein Prinzipschaltbild, basierend auf der Darstellung von Fig.11, wobei eine Energiequelle eine monodirektionale Energiequelle ist.

Der hier vorgeschlagene Ansatz verbindet unterschiedliche elektrische (Energie-)Quellen (auch (elektrische) Energiespeicher) insbesondere anhand von den elektrischen Quellen zugeordneten Steuerschaltungen mit den Anschlüssen eines elektrischen Antriebs umfassend beispielsweise mindestens einer Elektromaschine.

Die Steuerschaltungen der elektrischen Quellen entsprechen dabei Schaltungen für den Betrieb von elektrischen Maschinen an Gleichspannungsnetzen, die zumindest teilweise um Elemente erweitert sind, die den Energiefluss in die jeweilige Quelle insbesondere zumindest zeitweise unterbinden können.

Für den Fall, dass dieser Energiefluss dauerhaft unterbunden werden soll (z.B. beim Anschluss einer Brennstoffzelle) kann ein solches Element ungesteuert (z.B. mittels mindestens einer Diode) ausgeführt sein.

Für den Fall, dass dieser Energiefluss nur während bestimmter Zustände des Systems unterbunden werden soll, kann das Element gesteuert (z.B. umfassend mindestens einem Transistor, IGBT, FET, Thyristor, Triac und/oder Dynistor) ausgeführt sein.

Die den Energiefluss zumindest teilweise und/oder zeitweise unterbindenden Elemente können dabei für diejenigen elektrischen Quellen entfallen, welche in allen Betriebszuständen eine gegenüber den jeweils anderen elektrischen Quellen des Gesamtaggregates höhere Gleichspannungen aufweisen, bzw. bei denen eine Quellenimpedanz geeignet ist, den zwischen den elektrischen Quellen fließenden Ausgleichsstrom derart zu begrenzen, dass das Gesamtaggregat oder System bzw. Teile davon nicht beschädigt wird/werden.

Vorzugsweise kann ein für die Entlastung des jeweiligen elektrischen Energiespeichers eventuell vorhandener Puffer- bzw. Filterkondensator zwischen dem elektrischen Speicher und dem zusätzlichen Schaltelement vorgesehen sein.

Insbesondere kann zwischen dem zusätzlichen Schaltelement und Wechselrichterzweigen bzw. an Wechselrichterzweigen zumindest ein Kommutierungskondensator oder ein sog. Snubberkreis vorgesehen sein, der die Kommutierungsblindleistung der einzelnen Schalter kompensiert. Die beispielsweise hierfür verwendeten Kondensatoren weisen vorzugsweise eine geringe Kapazität bei hoher Strombelastbarkeit auf. Hierfür können beispielsweise keramische Kondensatoren eingesetzt werden.

Auch ist es möglich, an Phasenabgängen der Wechselrichterzweige zusätzliche Induktivitäten vorzusehen, welche die in Bezug auf Motorklemmen und auf unvermeidliche Koppelkapazitäten (z.B. durch Steuerungen, Vorladeschaltungen, Gehäusekapazitäten und Y-Kondensatoren) parallelen Wechselrichter hochfrequenztechnisch entkoppeln. Diese Induktivitäten sind vorzugsweise wesentlich kleiner bemessen als die Induktivitäten der Elektromaschinenwicklungen und kompensieren zumindest teilweise mit ihrer induktiven Blindleistung insbesondere die kapazitive Blindleistung der Koppelkapazitäten zwischen den verschiedenen Netzteilen.

Im Folgenden werden beispielhaft die Szenarien "Parallelbetrieb von Energiespeichern OHNE Überlappungsbereich der Betriebsspannung" und "Parallelbetrieb von Energiespeichern MIT Überlappungsbereich der Betriebsspannung" an Ausführungsbeispielen erläutert. Hierbei werden unterschiedliche Kombinationen von elektrischen Energiequellen (Doppelschichtkondensatoren und Brennstoffzelle bzw. Doppelschichtkondensatoren und Batterie) gezeigt, die entsprechend durch unterschiedliche Kombinationen gleicher oder unterschiedlicher elektrischer Energiequellen oder Energiespeicher (z.B. Brennstoffzelle und Batterie, Batterie und Batterie, etc.) ersetzt oder ergänzt werden können.

Entsprechend sind die gezeigten Szenarien erweiterbar für eine Vielzahl von elektrischen Energiequellen sowie für Elektromaschinen mit Mehrwicklungssystemen bzw. zusätzlichen Wicklungsabgriffen (integrierter Transformator). Mehrwicklungssysteme bzw. zusätzliche Wicklungsabgriffe sind insbesondere dann sinnvoll, wenn die verschiedenen elektrischen Energiequellen bzw. elektrischen Energiespeicher sich in ihrer Klemmenspannung und ihrem Beitrag zur Systemleistung deutlich unterscheiden. Vorzugsweise sind bei Anordnungen mit Mehrwicklungssystemen oder zusätzlichen Wicklungsabgriffen alle Spannungen, Ströme und Schaltelemente entsprechend der bekannten Regeln für transformatorische Übersetzung auf eine Bezugsebene umzurechnen.

### Ausführungsform (A)

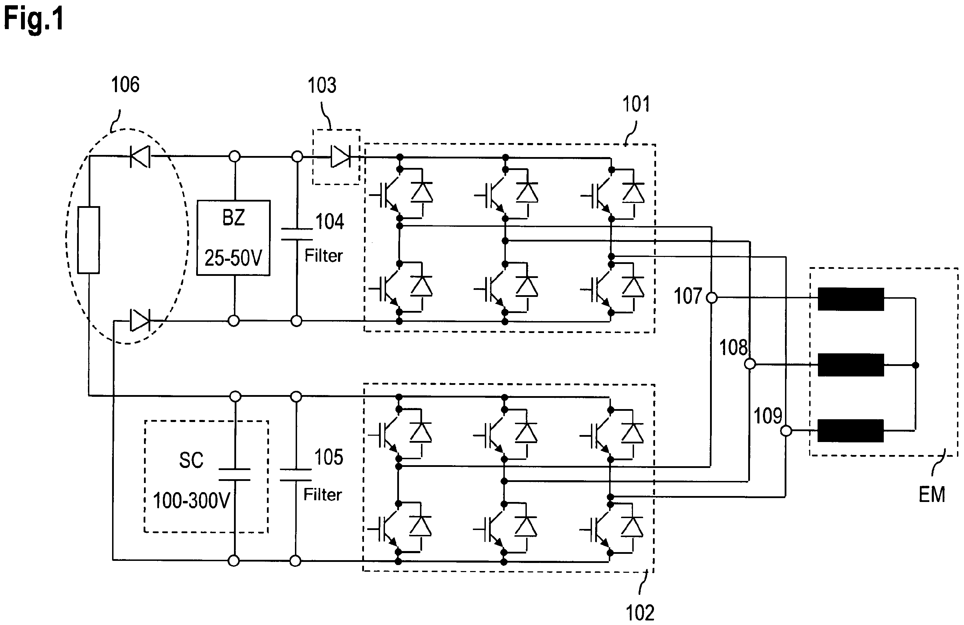

In **Fig.1** wird ein Beispiel für eine Anordnung zum "Parallelbetrieb von Energiespeichern OHNE Überlappungsbereich der Betriebsspannungen" gezeigt umfassend
- eine Doppelschichtkondensatorquelle SC hoher Spannung (100-300V),
- eine Brennstoffzelle BZ niedriger Spannung (25-50V),
- (Drehstrom-)Wechselrichter 101 und 102 und
- einer Elektromaschine EM.

Parallel zu der Brennstoffzelle BZ ist ein Filter 104 z.B. in Form eines Kondensators vorgesehen. Über ein Element 103 zur Unterbindung des Energieflusses zurück in die Brennstoffzelle BZ ist eine Wechselrichterbrücke bzw. ein Wechselrichter 101 angeschlossen.

Der Wechselrichter umfasst eine Parallelschaltung aus drei Serienschaltungen, die jeweils zwei elektrische Schalter aufweisen. Jede der Serienschaltungen hat zwischen den elektrischen Schaltern einen Mittenabgriff, wobei je ein Mittenabgriff mit einem der Knoten 107 bis 109 verbunden ist.

Als elektrische Schalter sind beispielhaft IGBTs eingesetzt, wobei pro IGBT eine Freilaufdiode entgegen die Kollektor-Emitter-Strecke angeordnet ist. Die einzelnen elektrischen Schalter des Wechselrichters 101 werden mittels einer Ansteuereinheit (nicht dargestellt) geeignet aktiviert bzw. deaktiviert.

An je einem der Knoten 107 bis 109 ist eine Spule der Elektromaschine EM angeordnet.

Die Doppelschichtkondensatorquelle SC ist parallel mit einem Filter 105 beschaltet und mit einem Wechselrichter 102, der im Aufbau dem Wechselrichter 101 entspricht, verbunden. Der Wechselrichter 101 ist ausgangsseitig ebenfalls über die drei Mittenabgriffe der elektrischen Schalter mit den Knoten 107 bis 109 verbunden.

Weiterhin ist die Brennstoffzelle BZ über eine Vorladeschaltung 106 mit der Doppelschichtkondensatorquelle SC verbunden. Hierzu ist der positive Pol der Brennstoffzelle BZ über eine Diode (Anode-Kathode) und einen Widerstand mit dem positiven Pol der Doppelschichtkondensatorquelle SC verbunden. Der negative Pol der Brennstoffzelle BZ ist über eine Diode (Kathode-Anode) mit dem negativen Pol der Doppelschichtkondensatorquelle SC verbunden.

Wird beispielsweise die Doppelschichtkondensatorquelle SC mit einer ladezustandsabhängigen Spannung zwischen 300V und 100V und die Brennstoffzelle BZ mit einer belastungsabhängigen Spannung zwischen 50V und 25V betrieben, ist die Steuerschaltung für die Brennstoffzelle BZ um das Element 103 zur Unterbindung des Energieflusses zu ergänzen, um Ausgleichsströme während des Betriebes in Richtung der Brennstoffzelle BZ zu verhindern.

Der Ausgleichsstrom von der BZ in Richtung einer leeren Doppelschichtkondensatorquelle SC (in diesem Fall ist die Spannung der Doppelschichtkondensatorquelle SC kleiner als die Spannung der Brennstoffzelle BZ, z.B. bei Inbetriebsetzung der Doppelschichtkondensatorquelle SC) wird für kurze Dauer durch die verhältnismäßig große Impedanz der Brennstoffzelle BZ wirksam begrenzt.

Vorzugsweise ist zwischen der Brennstoffzelle BZ und der Doppelschichtkondensatorquelle SC eine Vorladeschaltung 106 kleiner Leistung (z.B. Dioden mit Widerstand) vorgesehen, welche die Mindestspannung der Doppelschichtkondensatorquelle SC auf die Spannung der Brennstoffzelle BZ begrenzt; durch Vergleich beider Quellenspannungen in den Steuerschaltungen kann eine Inbetriebsetzung der Steuerschaltung zwischen der Brennstoffzelle BZ und der Elektromaschine EM abhängig von einem Betriebszustand beispielsweise bis zum Ende der Vorladung der Doppelschichtkondensatorquelle SC auf die Spannung der Brennstoffzelle BZ unterbunden werden (Impulssperre).

Ein Energiefluss zwischen den verschiedenen Energiespeichern und der Elektromaschine bzw. von der Brennstoffzelle BZ in die Doppelschichtkondensatorquelle SC wird durch eine entsprechende Aktivierung der jeweiligen Steuerschaltungen erreicht.

Ein singulärer Betrieb der Elektromaschine EM an der Doppelschichtkondensatorquelle SC (generatorisch bzw. motorisch bei passiver Brennstoffzelle BZ) erfolgt durch eine geeignete Ansteuerung des Wechselrichters 102. Für diesen Betrieb ist es möglich, den Wechselrichter 101 zwischen der Brennstoffzelle BZ und der Elektromaschine EM stillzulegen (Impulssperre) oder synchron zum Wechselrichter 102 der Doppelschichtkondensatorquelle SC anzusteuern, ohne das der Zweig der Brennstoffzelle die Funktion beeinflusst.

Ein singulärer Betrieb der Elektromaschine EM an der Brennstoffzelle BZ (motorisch bei passiver Doppelschichtkondensatorquelle SC) erfolgt durch Ansteuerung des Wechselrichters 101 bei inaktivem Wechselrichter 102 (Impulssperre). Wegen der Diode 103 zwischen der Brennstoffzelle BZ und dem Wechselrichter 101 wird eine auch nur temporäre Rückspeisung einer Energie in die Brennstoffzelle BZ verhindert. Schaltzustände am Wechselrichter 101, die zu einer Rückspeisung führen könnten, sind bei singulärem Betrieb der Elektromaschine EM an der Brennstoffzelle BZ vorzugsweise auszuschließen. Dies ist zum Beispiel möglich, wenn während dieses Betriebs Schaltzustände, die eine aktive Verminderung des Strombetrages in den Motorwicklungen zur Folge haben, vermieden werden. Bei Verwendung eines Zeigermodells stehen für die Steuerung nur Stromzeiger zur Verfügung, die zu einer zum aktuellen Phasenstrom gleichsinnigen Spannung führen ebenso wie die Nullzeiger, die zum Kurzschluss von Motorwicklungen führen. Allerdings stehen in dem Zeigermodell keine Zeiger zur Verfügung, die zu einer dem aktuellen Strom entgegen gerichteten Spannung an der Elektromaschine EM führen.

Ein Energietransfer von der Brennstoffzelle BZ in die Doppelschichtkondensatorquelle SC erfolgt durch Verwendung der Schaltzustände des Wechselrichters 101 der Brennstoffzelle BZ, die im singulären Betrieb der Elektromaschine EM an der Brennstoffzelle BZ vorzugsweise nicht verwendet werden (unter Bezugnahme auf das Zeigermodell entspricht dies den Zeigern, die zu einer dem aktuellen Strom entgegen gerichteten Spannung an der Elektromaschine EM führen). Wegen der Diode 103 steigt die Spannung bei Schaltzuständen, die in Verbindung mit der Diode 103 den Stromfluss in der Elektromaschine EM über den Wechselrichter 101 unterbinden soweit an, dass die Rückspeisung der Energie über den Wechselrichter 102 in die Doppelschichtkondensatorquelle SC erfolgt. Die Regelung des Wechselrichters 101 berücksichtigt in diesem Fall die Spannung der Doppelschichtkondensatorquelle SC, um die Zeitdauer dieses Zustandes für eine optimierte Rückspeisung zu bestimmen.

Die vier Betriebsfälle (motorisch über die Brennstoffzelle BZ, motorisch über die Doppelschichtkondensatorquelle SC, generatorisch über die Doppelschichtkondensatorquelle SC und Laden der Doppelschichtkondensatorquelle SC aus der Brennstoffzelle BZ) können wechselseitig überlagert werden. Dabei kann bei vorhandenen elektrischen Verbindungen zwischen der Brennstoffzelle BZ und der Doppelschichtkondensatorquelle SC (z.B. durch Y-Kondensatoren zwischen den Teilnetzen und einem Bezugspotential des Gehäuses bzw. Erde) gewährleistet sein, dass durch die in Bezug auf die Klemmen der Elektromaschine EM parallelen Wechselrichter kein Kurzschluss der Energiequellen erfolgt (indirekter Brückenkurzschluss über die Schalter beider Wechselrichter). Dies wird durch eine Einschaltverriegelung (Totzeitüberwachung) für die einzelnen Schalter erreicht, welche die Schaltzustände des jeweils anderen Wechselrichters adäquat zu den Schaltzuständen im eigenen Wechselrichter berücksichtigt.

Die Mischung der Betriebsfälle kann dabei auch dazu genutzt werden, um beispielsweise die elektrischen Energiespeicher entsprechend ihrer aktuellen Spannung und/oder ihrer Leistungsfähigkeit verschiedenen Abschnitten einer Zeitdauer oder Periode der elektrischen Grundwelle zuzuordnen und dadurch die Elektromaschine und die elektrischen Energiespeicher optimal zu nutzen.

### Ausführungsform (B)

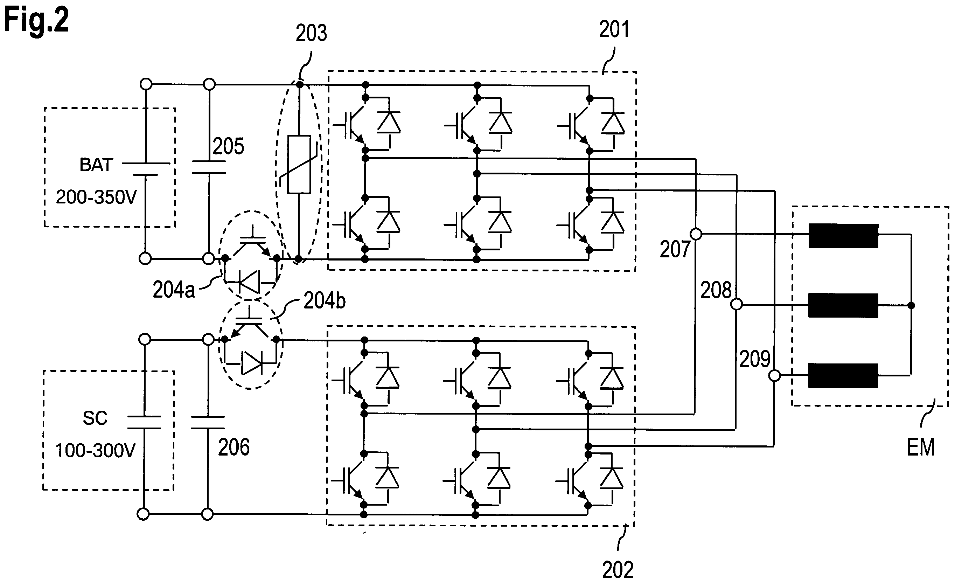

**Fig.2** zeigt ein Beispiel für einen "Parallelbetrieb von Energiespeichern MIT Überlappungsbereich der Betriebsspannungen" umfassend
- eine Doppelschichtkondensatorquelle SC hoher Spannung (100-300V),
- eine Batterie BAT hoher Spannung (200-350V),
- (Drehstrom-)Wechselrichter 201, 202 und
- eine Elektromaschine EM.

Parallel zu der Batterie BAT ist ein Filter 206 in Form eines Kondensators vorgesehen. Die Batterie BAT ist über ein Element 204a zur Unterbindung des Energieflusses mit einem Wechselrichter 201 verbunden. Das Element 204a ist beispielhaft in dem negativen Zweig der Batterie BAT angeordnet und als gesteuertes Element ausgeführt. Hierzu weist das Element 204a einen IGBT mit einer entgegen die Kollektor-Emitter-Strecke gepolten Freilaufdiode auf.

Vorzugsweise ist am Eingang des Wechselrichters 201 eine Überspannungsschutzschaltung 203 vorgesehen.

Parallel zu der Doppelschichtkondensatorquelle SC ist ein Filter 206 vorgesehen in Form eines Kondensators. Die Doppelschichtkondensatorquelle SC ist über ein Element 204b zur Unterbindung des Energieflusses mit einem Wechselrichter 202 verbunden. Das Element 204b ist beispielhaft in dem positiven Zweig der Doppelschichtkondensatorquelle SC angeordnet und als gesteuertes Element ausgeführt. Hierzu weist das Element 204b einen IGBT mit einer entgegen die Kollektor-Emitter-Strecke gepolten Freilaufdiode auf.

Die Wechselrichter 201, 202 sind jeweils entsprechend dem Wechselrichter 101 aus Fig.1 aufgebaut. Die Wechselrichter 201, 202 sind ausgangsseitig jeweils über die drei Mittenabgriffe der elektrischen Schalter mit Knoten 207 bis 209 verbunden. An je einem der Knoten 207 bis 209 ist eine Spule der Elektromaschine EM angeordnet.

Wird beispielsweise die Doppelschichtkondensatorquelle SC mit einer ladezustandsabhängigen Spannung zwischen 300V und 100V und die Batterie BAT mit einer belastungsabhängigen Spannung zwischen 350V und 200V betrieben, sind die Steuerschaltung für die Batterie BAT als auch die Steuerschaltung für die Doppelschichtkondensatorquelle SC um Elemente 204a, 204b zur temporären Unterbindung des Energieflusses zu ergänzen, um Ausgleichsströme während des Betriebes der jeweiligen Energiequelle zu verhindern, ohne dabei die Aufnahmefähigkeit für regenerative Energie einzuschränken.

Ein singulärer Betrieb der Elektromaschine EM an der Doppelschichtkondensatorquelle SC (generatorisch bzw. motorisch bei passiver Batterie BAT) erfolgt durch entsprechende Ansteuerung des Wechselrichters 202 während der Schalter 204a für die Rückspeisung in die Batterie BAT sperrt. Für diesen Betrieb ist es vorteilhaft, den Wechselrichter 201 stillzulegen (Impulssperre), da im Beispiel gemäß Fig.2 die Spannung der Doppelschichtkondensatorquelle SC niedriger sein kann als die Spannung der Batterie BAT.

Ein singulärer Betrieb der Elektromaschine EM an der Batterie BAT (generatorisch bzw. motorisch bei passiver Doppelschichtkondensatorquelle SC) erfolgt durch geeignete Ansteuerung des Wechselrichters 201 während der Schalter 204b für die Rückspeisung in die Doppelschichtkondensatorquelle SC sperrt. Für diesen Betrieb ist es vorteilhaft, den Wechselrichter 202 inaktiv zu schalten (Impulssperre), da die Spannung der Batterie BAT niedriger sein kann als die Spannung der Doppelschichtkondensatorquelle SC.

Ein Energietransfer von der Doppelschichtkondensatorquelle SC in Richtung der Batterie BAT bzw. in entgegen gesetzte Richtung erfolgt wie oben zu Fig.1 beschrieben, d.h. der elektrische Schalter 204a bzw. 204b des energieabgebenden Speichers für die Rückspeisung sperrt. Vorzugsweise kann die Steuerbarkeit des Schalters für die Rückspeisung genutzt werden, um den Strom in der Quelle zu modulieren und dadurch die Belastung der Speicher mit einem Rippelstrom zu reduzieren sowie die elektromagnetische Verträglichkeit der Schaltung zu verbessern und eine Funktion zur Vorladung eines Speichers wahrzunehmen.

Die sechs Betriebsfälle (motorisch über die Batterie BAT, generatorisch über die Batterie BAT, motorisch über die Doppelschichtkondensatorquelle SC, generatorisch über die Doppelschichtkondensatorquelle SC, Laden der Doppelschichtkondensatorquelle SC aus der Batterie BAT und Laden der Batterie BAT aus der Doppelschichtkondensatorquelle SC) können wie zuvor beschrieben überlagert werden. Dabei ist ein Wechsel der Energieflussrichtung in jedem Steuertakt für die Wechselrichterbrücken 201, 202 bzw. die zusätzlichen Schalter 204a, 204b möglich. Durch diese Modulation lassen sich geringe Belastungen der Energiespeicher durch Rippelströme bei einer gut regelbaren Leistungsaufteilung zwischen den Energiespeichern erzielen.

Die Speichereigenschaften der Induktivitäten der Elektromaschine EM bewirken, dass ein Stromfluss in diesen Induktivitäten nicht abreißen kann. Vorzugsweise wird durch eine Verknüpfung der Steuersignale der verschiedenen Schalter 204a, 204b für die Rückspeisung von Energie in die einzelnen Quellen sichergestellt, dass immer ein Netz eine Energieaufnahme aus der Elektromaschine EM zulässt. Die einfachste Realisierung erfolgt dabei über eine EXCLUSIV-ODER Ansteuerung der Schalter 204a und 204b.

Weiterhin kann ein zusätzliches Element vorgesehen sein, das die von der Elektromaschine rückgespeiste Energie unabhängig von der Ansteuerung der verschiedenen Energiequellen aufnehmen, speichern oder abführen kann, sobald die zulässige Systemspannung überschritten wird. Hierzu wird vorteilhaft ein redundanter Pfad zur Energieaufnahme vorgehalten, der auch bei ausgefallener Steuerung (also bei defekten Wechselrichtern 201, 202) eine Zerstörung von Bauteilen bzw. des Aggregates oder eine sonstige Gefährdung wirksam verhindert. Der Pfad zur Energieaufnahme wird zweckmäßig abhängig von den umzusetzenden Energiemengen ausgeführt:
- Bei kleinen Energiemengen: Suppressordioden oder Varistoren.
- Bei mittleren Energiemengen: Über Dioden an die Wechselrichterbrücken gekoppelte Kondensatoren mit Entladeschaltungen (Widerständen, etc.).
- Bei großen Energiemengen: Zusätzlicher Wechselrichter mit Puffer (Batterie, Kondensator) an den Motorklemmen.

Vorteilhaft weist der Puffer im Betrieb des Gesamtsystems immer die höchste vorkommende Spannung auf und benötigt deshalb kein Element, das die Rückspeisung unterbindet oder einschränkt. Vorzugsweise erfolgt eine Steuerung des Puffers analog zum dem Beispiel gemäß Fig.1

### Ausführungsform (C)

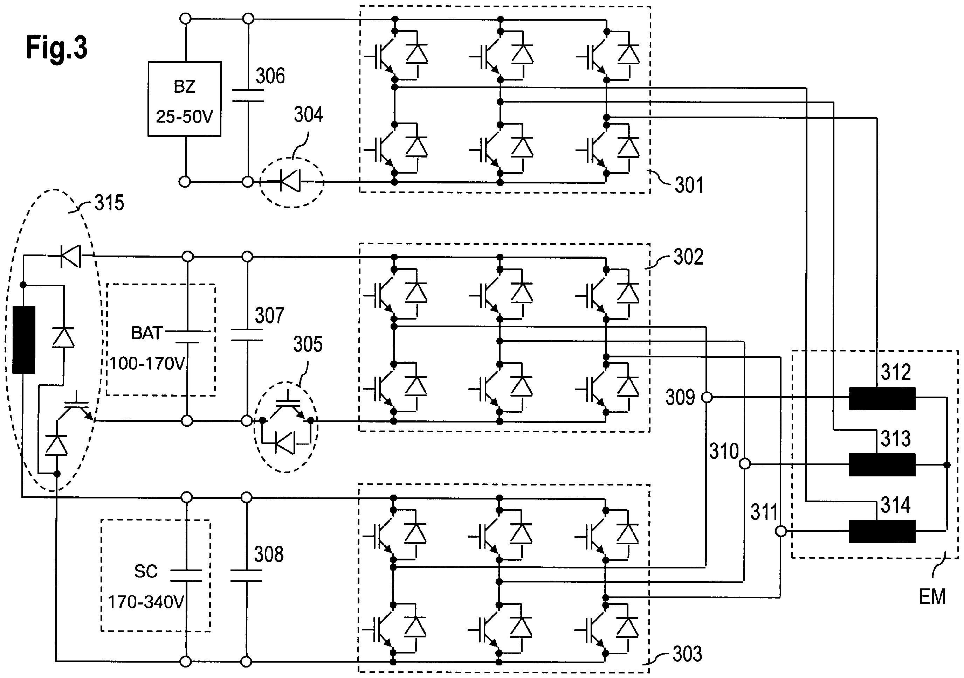

**Fig.3** zeigt ein Beispiel für einen "Parallelbetrieb von Energiespeichern OHNE Überlappungsbereich der Betriebsspannungen" umfassend
- eine Doppelschichtkondensatorquelle SC hoher Spannung (170-340V),
- eine Batterie BAT mittlerer Spannung (100-170V),
- eine Brennstoffzelle BZ geringer Spannung (25-50V),
- (Drehstrom-)Wechselrichter 301, 302, 303,
- eine Elektromaschine EM mit integriertem Transformator.

Parallel zu der Doppelschichtkondensatorquelle SC ist ein Filter 308 in Form eines Kondensators vorgesehen. Die Doppelschichtkondensatorquelle SC ist mit einem Wechselrichter 303 verbunden.

Parallel zu der Batterie BAT ist ein Filter 307 in Form eines Kondensators vorgesehen. Die Batterie BAT ist über ein Element 305 zur Unterbindung des Energieflusses mit einem Wechselrichter 302 verbunden. Das Element 305 ist beispielhaft in dem negativen Zweig der Batterie BAT angeordnet und als gesteuertes Element ausgeführt. Hierzu weist das Element 305 einen IGBT mit einer entgegen die Kollektor-Emitter-Strecke gepolten Freilaufdiode auf.

Parallel zu der Brennstoffzelle BZ ist ein Filter 306 in Form eines Kondensators vorgesehen. Die Brennstoffzelle BZ ist über ein Element 304 zur Unterbindung des Energieflusses mit einem Wechselrichter 301 verbunden. Das Element 304 ist beispielhaft in dem negativen Zweig der Batterie BAT angeordnet und als eine Diode (Kathode zeigt in Richtung der Brennstoffzelle BZ) ausgeführt.

Die Wechselrichter 301, 302, 303 sind jeweils entsprechend dem Wechselrichter 101 aus Fig.1 aufgebaut.

Die Wechselrichter 302 und 303 sind ausgangsseitig jeweils über die drei Mittenabgriffe der elektrischen Schalter mit Knoten 309 bis 311 verbunden. An je einem der Knoten 309 bis 311 ist eine Spule 312 bis 314 der Elektromaschine EM angeordnet.

Die Spulen 312 bis 314 weisen vorzugsweise je einen Mittenabgriff auf, der jeweils mit einem der Mittenabgriffe der elektrischen Schalter des Wechselrichters 301 verbunden ist.

Weiterhin ist eine Vorladeschaltung 315 vorgesehen, die die Batterie BAT und die Doppelschichtkondensatorquelle SC koppelt. Hierzu ist der positive Pol der Batterie BAT über eine Reihenschaltung aus einer Diode (Anode-Kathode) und einer Spule mit dem positiven Pol der Doppelschichtkondensatorquelle SC verbunden. Der negative Pol der Batterie BAT ist über eine Reihenschaltung aus einem elektrischen Schalter IGBT (Emitter-Kollektor) und einer Diode (Kathode-Anode) mit dem negativen Pol der Doppelschichtkondensatorquelle SC verbunden. Die Vorladeschaltung 315 weist noch eine Diode auf, deren Kathode mit dem Mittenabgriff der Reihenschaltung aus Diode und Spule und deren Anode mit dem negativen Pol der Doppelschichtkondensatorquelle SC verbunden ist.

Wird beispielsweise die Doppelschichtkondensatorquelle SC mit einer ladezustandsabhängigen Spannung zwischen 350V und 170V, die Batterie BAT mit einer belastungsabhängigen Spannung zwischen 170V und 100V und die Brennstoffzelle BZ mit einer belastungsabhängigen Spannung zwischen 50V und 25V betrieben, empfiehlt sich die Nutzung zusätzlicher Wicklungsabgriffe 312 bis 314 an der Elektromaschine EM für den Wechselrichter 301 der Brennstoffzelle BZ. Hierdurch kann erreicht werden, dass die Spannung der Brennstoffzelle BZ um einen Faktor zwei bis vier transformiert wird. Für den Faktor vier wird ausgenutzt, dass eine Brennstoffzelle BZ kleiner Leistung einen hohen Innenwiderstand aufweist, und dass die niedrige Spannung an der Batterie BAT nur beim Entladen der Batterie BAT auftritt und die Schaltung somit gewährleistet, dass ein dauerhafter Stromfluss aus der Brennstoffzelle BZ in die Batterie BAT und die Doppelschichtkondensatorquelle SC unterbunden wird.

Durch die transformatorische Übersetzung können z.B. für den Zweig der Brennstoffzelle BZ Halbleiterschalter mit niedrigerer Sperrspannung und günstigeren Durchlasseigenschaften eingesetzt, die Steuerzeiten optimiert und die Brennstoffzelle BZ zur Speisung der Elektromaschine EM auch bei höheren Drehzahlen effizient verwendet werden.

Die Steuerschaltung der Brennstoffzelle BZ entspricht vorzugsweise der Ausführungsform (A), ergänzt um ein ungesteuertes Element 304 zur Unterbindung eines regenerativen Energieflusses. Die Steuerschaltung der Batterie BAT entspricht vorzugsweise der Ausführungsform (B), ergänzt um ein gesteuertes Element 305 zur temporären Unterbindung eines regenerativen Energieflusses. Die Steuerschaltung der Doppelschichtkondensatorquelle SC entspricht weitgehend der Ausführungsform (A) ohne zusätzliche Elemente zur Unterbindung von Energieflüssen ausgeführt.

Die Steuerung des Energieflusses erfolgt entsprechend der vorstehenden Erläuterungen zu den Ausführungsformen (A) und (B). Zusätzlich ist die transformatorische Übersetzung zwischen dem Zweig der Brennstoffzelle BZ und den anderen beiden Zweigen für die Batterie BAT und die Doppelschichtkondensatorquelle SC bei der Regelung zu berücksichtigen. Weiterhin sind nunmehr sowohl Umladungen zwischen der Brennstoffzelle BZ und der Batterie BAT (nur in Richtung der Batterie BAT), zwischen der Brennstoffzelle BZ und der Doppelschichtkondensatorquelle SC (nur in Richtung der Doppelschichtkondensatorquelle SC) sowie zwischen der Batterie BAT und der Doppelschichtkondensatorquelle SC (bidirektional) als auch ein Betrieb der Elektromaschine EM an allen Quellen (Doppelschichtkondensatorquelle SC und Batterie BAT motorisch und/oder generatorisch, Brennstoffzelle BZ nur motorisch) möglich.

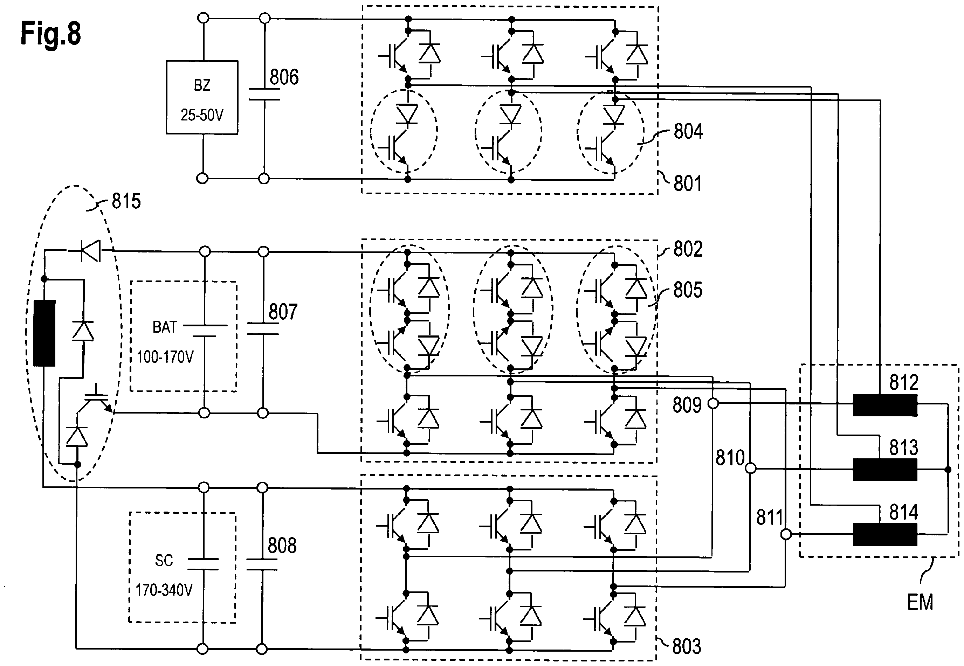

**Fig.8** zeigt ein weiteres Beispiel für eine Anordnung zum Parallelbetrieb von mehreren Energiespeichern, wobei in den Wechselrichtern Elemente zur temporären Unterbrechung des Energieflusses integriert sind.

Ähnlich der Schaltung gemäß Fig.3 umfasst die Schaltung aus Fig.8
- eine Doppelschichtkondensatorquelle SC hoher Spannung (170-340V),
- eine Batterie BAT mittlerer Spannung (100-170V),
- eine Brennstoffzelle BZ geringer Spannung (25-50V),
- (Drehstrom-)Wechselrichter 801, 802, 803,
- eine Elektromaschine EM mit integriertem Transformator.

Parallel zu der Doppelschichtkondensatorquelle SC ist ein Filter 808 in Form eines Kondensators vorgesehen. Die Doppelschichtkondensatorquelle SC ist mit einem Wechselrichter 803 verbunden.

Die Wechselrichter 803 ist entsprechend dem Wechselrichter 101 aus Fig.1 aufgebaut.

Der Wechselrichter 803 ist ausgangsseitig jeweils über die drei Mittenabgriffe der elektrischen Schalter mit Knoten 809 bis 811 verbunden. An je einem der Knoten 809 bis 811 ist eine Spule 812 bis 814 der Elektromaschine EM angeordnet.

Parallel zu der Batterie BAT ist ein Filter 807 in Form eines Kondensators vorgesehen. Die Batterie BAT ist mit einem Wechselrichter 802 verbunden.

Der Wechselrichter 802 umfasst eine Parallelschaltung aus drei Serienschaltungen, wobei jede Serienschaltung zwei elektrische Schalteinheiten aufweist. Die erste elektrische Schalteinheit umfasst beispielhaft einen IGBT umfassend eine Freilaufdiode, die entgegen der Kollektor-Emitter-Strecke angeordnet ist. Eine zweite elektrische Schalteinheit 805 umfasst zwei in Reihe geschaltete IGBTs, deren jeder eine entgegen die Kollektor-Emitter-Strecke angeordnete Freilaufdiode aufweist, wobei die beiden IGBTs der Schalteinheit 805 miteinander verbundene Emitter aufweisen.

Die Serienschaltung aus den zwei elektrischen Schalteinheiten IGBT und Schalteinheit 805 weist pro Zweig einen Mittenabgriff auf, der jeweils mit einem der Knoten 809 bis 811 verbunden ist.

Die zwei elektrischen Schalteinheiten können auch miteinander vertauscht angeordnet sein.

Der elektrische Schalter ist lediglich beispielhaft als IGBT ausgeführt. Die einzelnen Schalter des Wechselrichters 802 werden mittels einer Ansteuereinheit (nicht dargestellt) geeignet aktiviert bzw. deaktiviert.

An je einem der Knoten 809 bis 811 ist je eine Spule 812 bis 814 der Elektromaschine EM angeordnet.

Parallel zu der Brennstoffzelle BZ ist ein Filter 806 in Form eines Kondensators vorgesehen. Die Brennstoffzelle BZ ist mit einem Wechselrichter 801 verbunden.

Der Wechselrichter 801 umfasst eine Parallelschaltung aus drei Serienschaltungen, wobei jede Serienschaltung zwei elektrische Schalteinheiten aufweist. Die erste elektrische Schalteinheit umfasst beispielhaft einen IGBT mit einer Freilaufdiode, die entgegen der Kollektor-Emitter-Strecke angeordnet ist. Eine zweite elektrische Schalteinheit 804 umfasst eine Serienschaltung aus einer Diode und einem IGBT, wobei die Diode die gleiche Polung wie die Emitterdiode aufweist.

Die Serienschaltung aus den zwei elektrischen Schalteinheiten IGBT und Schalteinheit 804 weist pro Zweig einen Mittenabgriff auf, der jeweils mit einem Mittenabgriff der Spulen 812 bis 814 verbunden ist.

Der elektrische Schalter ist lediglich beispielhaft als IGBT ausgeführt. Die einzelnen Schalter des Wechselrichters 801 werden mittels einer Ansteuereinheit (nicht dargestellt) geeignet aktiviert bzw. deaktiviert.

Weiterhin ist eine Vorladeschaltung 815 vorgesehen, die die Batterie BAT und die Doppelschichtkondensatorquelle SC koppelt. Hierzu ist der positive Pol der Batterie BAT über eine Reihenschaltung aus einer Diode (Anode-Kathode) und einer Spule mit dem positiven Pol der Doppelschichtkondensatorquelle SC verbunden. Der negative Pol der Batterie BAT ist über eine Reihenschaltung aus einem elektrischen Schalter IGBT (Emitter-Kollektor) und einer Diode (Kathode-Anode) mit dem negativen Pol der Doppelschichtkondensatorquelle SC verbunden. Die Vorladeschaltung 815 weist noch eine Diode auf, deren Kathode mit dem Mittenabgriff der Reihenschaltung aus Diode und Spule und deren Anode mit dem negativen Pol der Doppelschichtkondensatorquelle SC verbunden ist.

Die Schalteinheit 804 stellt einen rückwärtssperrenden Schalter dar, der insbesondere durch Verschaltung oder als ein Single-Chip realisiert sein kann. Entsprechend kann die Schalteinheit 805 als bidirektionaler Schalter in Form einer Verschaltung oder als ein Single-Chip umgesetzt sein.

Bei den Schalteinheiten 804 und 805 handelt es sich bevorzugt um Elemente zur zumindest temporären Unterbindung des Energieflusses in die bzw. aus den Quellen oder Energiespeicher(n). Die Schalteinheiten 804 und 805 sind vorteilhaft in die Schaltelemente der Wechselrichter integriert. Dies kann beispielsweise durch Verschaltung allgemein üblicher Elemente erreicht werden. Insbesondere ist es möglich, dass diese Elemente z.B. monolithisch in einem Chip integriert sind beispielsweise unter Verwendung rückwärtssperrender IGBTs, Thyristoren, etc. oder bidirektional schaltender FETs, IGBTs, etc.

Das erläuterte Prinzip ist entsprechend auf die vorstehenden Schaltungen gemäß Fig.1 oder Fig.2 anwendbar. Die Schalteinheiten 804 und 805 können jeweils in den gezeigten Wechselrichtern durchgängig oben oder unten vorgesehen sein.

### Elektrischer Antrieb mit Puffer

Vorzugsweise wird ein zusätzlicher Puffer in der Steuerung bereitgestellt, der unabhängig von der Auslegung des mindestens einen elektrischen Energiespeichers bzw. der mindestens einen elektrischen Energiequelle derart bemessen ist, dass dessen maximale Spannung größer ist als die (größte) Leerlaufspannung des mindestens einen elektrischen Energiespeichers bzw. der mindestens einen elektrischen Energiequelle. Insbesondere kann die Spannung des Puffers mindestens gleich der maximalen Spannung der Elektromaschine in jedem Betriebsfall sein.

Der zusätzliche Puffer ist vorzugsweise an einem Gleichspannungsanschluss der Steuerung vorgesehen.

Der zusätzliche Puffer ist vorzugsweise derart auszulegen, dass er eine in der Elektromaschine induktiv gespeicherte Energie periodisch aufnehmen und entweder an die Elektromaschine oder an einen anderen Verbraucher (z.B. einen Widerstand oder einen Varistor) abgeben kann.

Eine elektronische Steuereinrichtung umfasst für die Steuerung der Energieströme der elektrischen Quelle und des zusätzlichen Puffers vorzugsweise zusätzliche Elemente, die eine Umschaltung zwischen einzelnen Pfaden ermöglichen. Die Ausbildung der Elemente richtet sich vorzugsweise nach der Energiequelle bzw. nach dem Energiespeicher, insbesondere in Abhängigkeit davon, ob sich die Spannungsbereiche von der elektrischen Energiequelle und/oder dem elektrischen Energiespeicher und/oder dem Puffer überschneiden oder nicht und welche Energieflussrichtungen zulässig und/oder erforderlich sind.

In den hier gezeigten Ausführungsformen werden beispielhaft elektrische Schalter als IGBTs und Dioden gezeigt. Es sind jedoch auch andere Schalter einsetzbar, z.B. Transistoren, MOSFETs, GTOs, Triacs etc.

Die Ausführungsbeispiele sind auf alle bekannten Elektromaschinenprinzipien (Dreieckschaltung, Asynchronmaschine, Zweiphasenmaschine etc.) anwendbar. Zusätzliche Einrichtungen zum Verbessern der Eigenschaften von Wechselrichterbrücken (z.B. Snubber) sind mit den gezeigten Schaltungen bzw. Ausführungsformen kombinierbar.

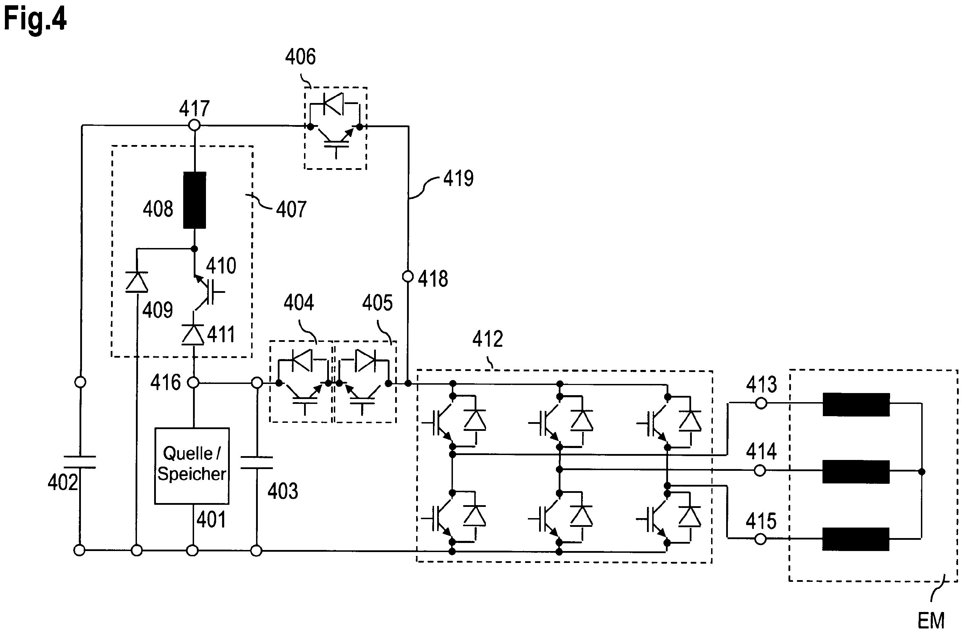

**Fig.4** zeigt ein Prinzipschaltbild für den Betrieb einer Elektromaschine EM mit einer beliebigen Energiequelle 401 und mit einem Puffer 402.

Parallel zu der Energiequelle 401 ist ein Filter 403 angeordnet, das vorzugsweise in Form eines Kondensators ausgeführt ist. Der positive Pol der Energiequelle 401 entspricht einem Knoten 416 und ist mit einer Vorladeschaltung 407 und über eine Reihenschaltung aus einem elektrischen Schalter 404 und einem elektrischen Schalter 405 mit einem Wechselrichter 412 verbunden. Zwischen dem Schalter 405 und dem Wechselrichter 412 ist der Übersicht halber ein Knoten 418 vorgesehen.

Die Schalter 404 und 405 umfassen jeweils einen IGBT mit einer entgegen die Kollektor-Emitter-Strecke angeordneten Freilaufdiode. Die Kollektor-Emitter-Strecke des Schalters 404 zeigt von dem Knoten 416 in Richtung des Wechselrichters 412, die Kollektor-Emitter-Strecke des Schalters 405 zeigt in die entgegengesetzte Richtung.

Der Wechselrichter 412 ist entsprechend dem Wechselrichter 101 aus Fig.1 aufgebaut und ist ausgangsseitig über die drei Mittenabgriffe der elektrischen Schalter mit Knoten 413 bis 415 verbunden. An je einem der Knoten 413 bis 415 ist eine Spule der Elektromaschine EM angeordnet.

Die Vorladeschaltung 407 umfasst zwei Dioden 409, 411, einen IGBT 410 und eine Spule 408. Der Knoten 416 ist mit der Anode der Diode 411 verbunden, deren Kathode mit dem Kollektor des IGBT 410 verbunden ist. Der Emitter des IGBT 410 ist mit der Kathode der Diode 409 und mit der Spule 408 verbunden. Die Anode der Diode 409 ist mit dem negativen Pol der Energiequelle 401 verbunden. Der verbleibende Anschluss der Spule 408 ist mit einem Knoten 417 verbunden.

Der Puffer 402 ist zwischen dem Knoten 417 und dem negativen Pol der Energiequelle 401 angeordnet.

Weiterhin ist ein elektrischer Schalter 406 zwischen dem Knoten 417 und dem Knoten 418 vorgesehen. Der elektrische Schalter 406 umfasst einen IGBT mit einer entgegen die Kollektor-Emitter-Strecke angeordneten Freilaufdiode. Die Kollektor-Emitter-Strecke des IGBT weist hierbei in Richtung des Knotens 418.

Die Vorladeschaltung 407 erlaubt den Puffer 402 auf das Spannungsniveau der Energiequelle 401 vorzuladen und dadurch einen unkontrollierten Ausgleichsstrom zwischen den beiden als Spannungsquelle wirkenden Zweigen zu verhindern.

Nach Vorladung der Energiequelle 401 können die Schalter 404 und 405 geschlossen und die Elektromaschine EM entsprechend betrieben werden. Soll ein Energierückfluss in die Energiequelle 401 verhindert werden, werden die Schalter 404 und 405 gesperrt, wodurch die Elektromaschine EM ihre Energie über einen Freilauf 419 in den Puffer 402 speist und diesen auflädt.

Für die Rückführung der Energie aus dem Puffer 402 in die Elektromaschine EM wird der Schalter 406 geschlossen und die Elektromaschine EM entsprechend der bekannten Steuerverfahren betrieben.

Vorzugsweise verwendet eine Regelung der Elektromaschine EM die aktuell an den Gleichspannungsklemmen des Wechselrichters 412 anliegende Spannung für die Bestimmung eines Pulsmusters des Wechselrichters 412.

Vorzugsweise ist bei der Ansteuerung der Schalter 406 und 404, 405 zu beachten, dass diese nicht gleichzeitig geschlossen sind. Dies kann beispielsweise über eine EXCLUSIV-ODER (EXOR) Ansteuerung gewährleistet werden.

Vorteilhaft wird eine Entladung des Puffers 402 unter einen definierten Sollwert (z.B. die Spannung der Energiequelle 401) verhindert, indem der Schalter 406 bei Erreichen einer Abschaltschwelle sperrt.

Die Ansteuersignale für die Schalter 406 und 404, 405 können in ihrer Pulsweite moduliert und mit der Ansteuerung der Schalter des Wechselrichters 412 verknüpft werden. Dadurch kann der Wechselrichter 412 in Verbindung mit den Induktivitäten der Elektromaschine EM als bidirektionaler DC-DC-Wandler zwischen der Energiequelle 401 und dem Puffer 402 genutzt werden. Die Energieflussrichtung kann auf diese Weise in jeder beliebigen Richtung zwischen der Energiequelle 401, dem Puffer 402 und der Elektromaschine EM vorgegeben werden. Die Änderung der Energieflussrichtung ist mit jedem Ansteuertakt möglich.

Weiterhin ist die Steuerung zwischen einer modulierten Ansteuerung und einer unmodulierten Ansteuerung (Blocktaktung) umschaltbar, um die Schaltverluste in den zusätzlichen Schaltern zu minimieren.

Vorzugsweise kann der Puffer 402 derart dimensioniert sein, dass die in dem Puffer 402 gespeicherte Energie ausreicht, um die Elektromaschine EM in den Arbeitspunkten zu betreiben, die für einen effizienten Betrieb der Elektromaschine EM an der Energiequelle 401 ungeeignet sind. Dabei kann der Puffer 402 die Energiequelle auch nur während eines Teils der elektrischen Periode der Elektromaschine EM ersetzen (z.B. im Maximum der induzierten Spannungen).

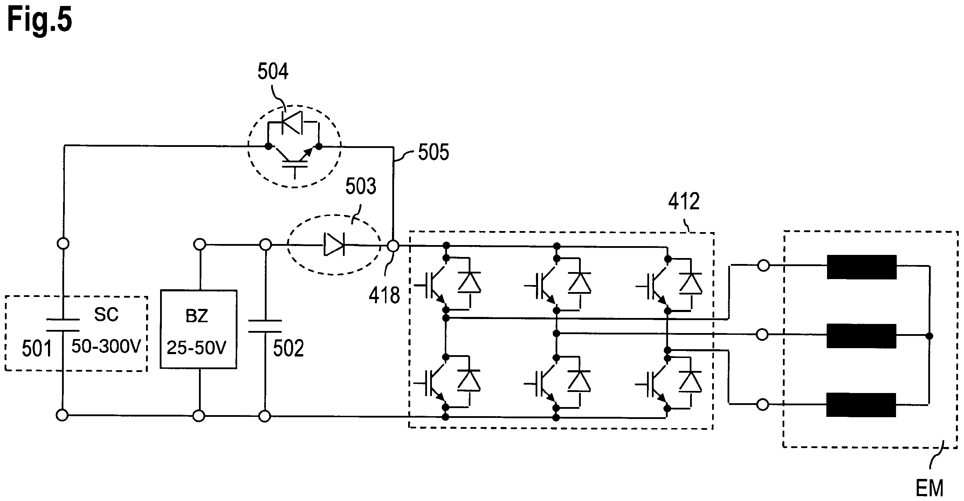

**Fig.5** zeigt eine Anordnung für einen elektrischen Antrieb umfassend eine Brennstoffzelle BZ als Energiequelle und einen SuperCap als Puffer 501.

Die Einheit aus Wechselrichter 412 und Elektromaschine EM entspricht in Richtung der Elektromaschine ab dem Knoten 418 der Anordnung aus Fig.4.

Der Puffer 501 ist über einen elektrischen Schalter 504 mit dem Knoten 418 verbunden. Der elektrische Schalter 504 umfasst einen IGBT mit einer entgegen die Kollektor-Emitter-Strecke angeordneten Freilaufdiode. Die Kollektor-Emitter-Strecke des IGBT weist hierbei in Richtung des Knotens 418.

Parallel zu der Brennstoffzelle BZ ist ein Filter 502 angeordnet, das vorzugsweise in Form eines Kondensators ausgeführt ist. Der positive Pol der Brennstoffzelle BZ ist über einen Schalter 503, der als ein passives Schaltelement in Form einer Diode (die Kathode zeigt in Richtung des Knotens 418) ausgeführt ist, mit dem Knoten 418 verbunden.

Mittels des Schalters 503 wird verhindert, dass ein Energierückfluss in Richtung der Brennstoffzelle BZ stattfindet. Die Energie des Puffers 501 ermöglicht es, die Elektromaschine EM auch im oberen Drehzahlbereich mit hoher Effizienz motorisch einzusetzen (z.B. als Booster für Beschleunigungsvorgänge, für ein Zuschalten von Verbrennungsmotoren bei Hybridfahrzeugen oder für einen Ausgleich von Turbolöchern der Verbrennungsmotoren). Ein generatorischer Betrieb der Elektromaschine EM ist insbesondere ausschließlich mittels des Puffers 501 möglich. Weiterhin, z.B. im Hinblick auf die Funktion des Schalters 504 wird auf die Ausführungen zu Fig.4 verwiesen.

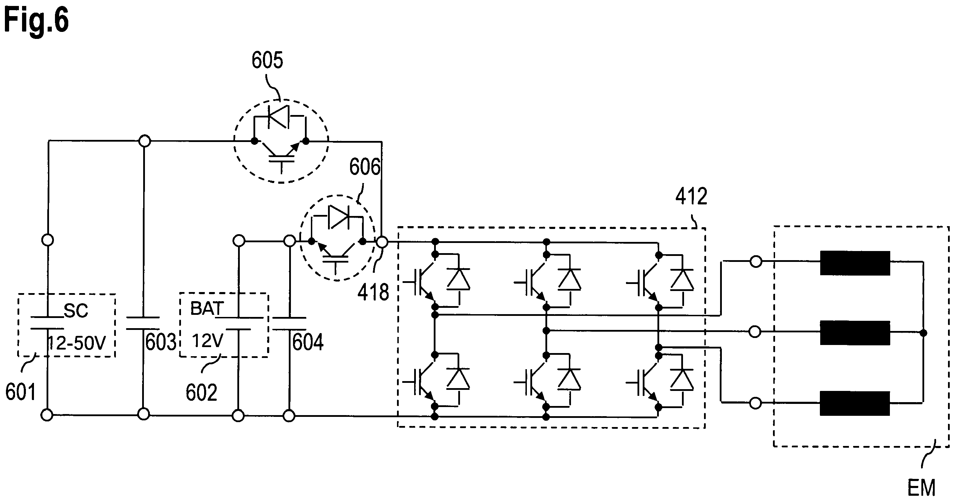

**Fig.6** zeigt eine Anordnung für einen elektrischen Antrieb mit einer Batterie 602 als Energiespeicher und einem SuperCap als Puffer 601.

Die Einheit aus Wechselrichter 412 und Elektromaschine EM entspricht in Richtung der Elektromaschine ab dem Knoten 418 der Anordnung aus Fig.4.

Der Puffer 601 ist über einen elektrischen Schalter 605 mit dem Knoten 418 verbunden. Der elektrische Schalter 605 umfasst einen IGBT mit einer entgegen die Kollektor-Emitter-Strecke angeordneten Freilaufdiode. Die Kollektor-Emitter-Strecke des IGBT weist hierbei in Richtung des Knotens 418. Parallel zu dem Puffer 601 ist ein Filter 603, vorzugsweise in Form eines Kondensators, angeordnet.

Parallel zu der Batterie 602 ist ein Filter 604 angeordnet, das vorzugsweise in Form eines Kondensators ausgeführt ist. Der positive Pol der Batterie 602 ist über einen elektrischen Schalter 606 mit dem Knoten 418 verbunden. Der elektrische Schalter 606 umfasst einen IGBT mit einer entgegen die Kollektor-Emitter-Strecke angeordneten Freilaufdiode. Die Kollektor-Emitter-Strecke des IGBT weist hierbei in Richtung der Batterie 602.

Bei Verwendung der Batterie 602 als Energiequelle vereinfacht sich die Schaltung gemäß Fig.4 derart, dass alle Elemente für eine kontrollierte Vorladung des Puffers 601 entfallen können. Der Puffer 601 entspricht in Funktion und Bemessung dem voranstehenden Beispiel. Die weiteren Eigenschaften ergeben sich aus den vorstehenden Erläuterungen.

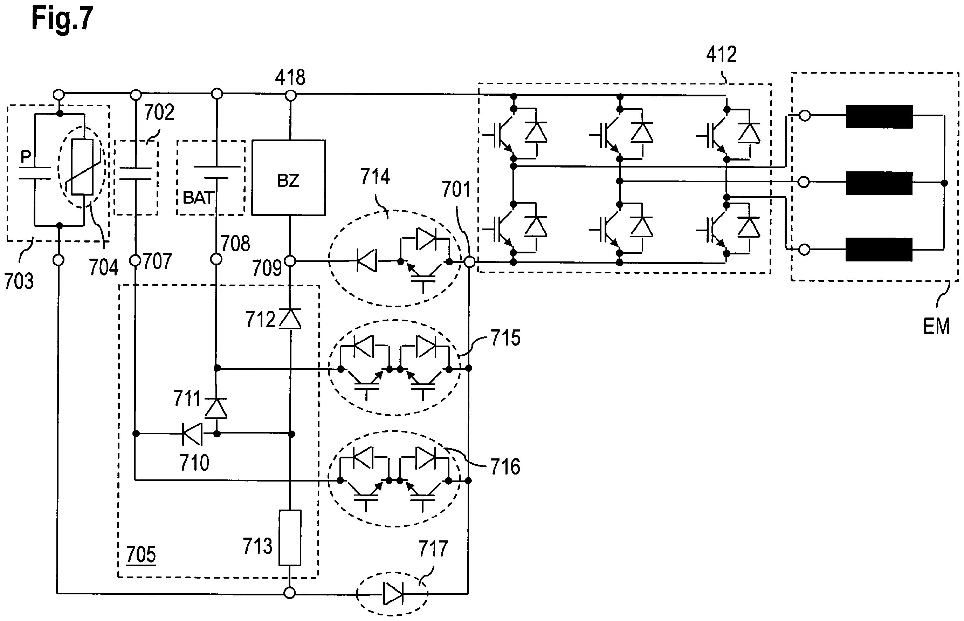

**Fig.7** zeigt eine Anordnung für einen elektrischen Antrieb mit einer Brennstoffzelle BZ als Energiequelle, einer Batterie BAT als Energiespeicher, einem SuperCap 702 als Booster und einer Kondensator-Varistor-Kombination als Puffer 703 ohne Energierückspeisung in die Elektromaschine EM.

Die Kondensator-Varistor-Kombination 703 umfasst eine Parallelschaltung aus einem Kondensator P und einem Varistor 704, der als Überspannungsschutz für den Kondensator P dient.

Die Einheit aus Wechselrichter 412 und Elektromaschine EM entspricht in Richtung der Elektromaschine EM ab dem Knoten 418 und ab einem Knoten 701 der Anordnung aus Fig.4.

Die positiven Pole der Kondensator-Varistor-Kombination 703, des SuperCap 702, der Batterie BAT und der Brennstoffzelle BZ sind mit dem Knoten 418 verbunden.

Der negative Pol der Kondensator-Varistor-Kombination 703 ist mit einem Knoten 706 verbunden. Der negative Pol des SuperCap 702 ist mit einem Knoten 707, der negative Pol der Batterie BAT mit einem Knoten 708 und der negative Pol der Brennstoffzelle BZ mit einem Knoten 709 verbunden.

Weiterhin ist eine Vorladeschaltung 705 vorgesehen umfassend drei Dioden 710 bis 712 und einen Widerstand 713. Die Kathode der Diode 710 ist mit dem Knoten 707 verbunden, die Anode der Diode 710 ist mit der Anode der Diode 711 und mit der Anode der Diode 712 und mit einem Anschluss des Widerstands 713 verbunden. Der verbleibende Anschluss des Widerstands 713 ist mit dem Knoten 706 verbunden. Die Kathode der Diode 711 ist mit dem Knoten 708 und die Kathode der Diode 712 ist mit dem Knoten 709 verbunden.

Ein elektrischer Schalter 714 ist zwischen dem Knoten 709 und dem Knoten 701 angeordnet und umfasst eine Reihenschaltung aus einer Diode und einem IGBT mit entgegen der Kollektor-Emitter-Strecke angeordneter Freilaufdiode. Die Kollektor-Emitter-Strecke des IGBT sowie die Kathode der Diode zeigen in Richtung des Knotens 709. Der Schalter 714 ist zur Unterbrechung des Energieflusses zwischen der Elektromaschine EM und der Brennstoffzelle BZ vorgesehen. Hierzu kann der Schalter 714 bidirektional sperren oder unidirektional leiten.

Ein elektrischer Schalter 715 ist zwischen dem Knoten 708 und dem Knoten 701 angeordnet und umfasst zwei in Reihe geschaltete entgegengesetzt angeordnete IGBTs mit je einer entgegen der Kollektor-Emitter-Strecke angeordneten Freilaufdiode. Der Schalter 715 ist zur Unterbrechung des Energieflusses zwischen der Elektromaschine EM und der Batterie BAT vorgesehen und kann bidirektional leiten oder sperren.

Ein elektrischer Schalter 716 ist zwischen dem Knoten 707 und dem Knoten 701 angeordnet und umfasst zwei in Reihe geschaltete entgegengesetzt angeordnete IGBTs mit je einer entgegen der Kollektor-Emitter-Strecke angeordneten Freilaufdiode. Der Schalter 716 ist zur Unterbrechung des Energieflusses zwischen der Elektromaschine EM und dem SuperCap 702 vorgesehen und kann bidirektional leiten oder sperren.

Eine ungesteuerter Schalter 717 in Form einer Diode ist zwischen dem Knoten 706 und dem Knoten 701 angeordnet. Die Kathode der Diode zeigt dabei in Richtung des Knotens 701. Der Schalter 717 dient dem Freilauf zwischen der Elektromaschine EM und der Kondensator-Varistor-Kombination 703.

Das in Fig.4 gezeigte Prinzip ist auch auf eine parallele Nutzung mehrerer elektrischer Energiequellen und Energiespeicher für den Betrieb der Elektromaschine EM anwendbar. Hierbei können sich die Spannungsbereiche und die Leistungsfähigkeiten der einzelnen Energiequellen, Energiespeicher und Puffer unterscheiden.

Eine derartige Zusammenschaltung von Brennstoffzelle BZ, Batterie BAT, SuperCap 702 und Kondensator-Varistor-Kombination 703 als Puffer ist zum Bespiel sinnvoll, um möglichst günstige Auslegungen für Quelle und Speicher zu erzielen, d.h. die Brennstoffzelle BZ mit wenigen Kilowatt Leistung erzeugt die für einen Fahrzyklus notwendige Gesamtenergie, die Batterie BAT gleicht mittlere Schwankungen der vom Antrieb geforderten Leistung über längere Wegstrecken aus, der SuperCap 702 gleicht große Schwankungen der vom Antrieb geforderten Leistung über kurze Wegstrecken aus, und die Kondensator-Varistor-Kombination 703 gewährleistet als Puffer in allen Fahrzuständen den sicheren und effizienten Betrieb des elektrischen Antriebs (niedrige Speicher- und Quellenspannungen sind auch bei hohen induzierten Spannungen der Elektromaschine ohne Feldschwächung sinnvoll darstellbar).

Hierbei ist vorzugsweise ein Pfad für die Aufnahme der induktiv in der Elektromaschine EM gespeicherten Energie ausgelegt. Im Fig.7 ist dafür der mittels Freilauf angekoppelte Pufferzweig umfassend die Kondensator-Varistor-Kombination 703 vorgesehen.

Die Bedingung, dass die Spannung des Pufferzweiges mindestens gleich der höchsten Leerlaufspannung der anderen Quellen ist, wird durch die Vorladeschaltung 705 gewährleistet, die Entnahme der Energie aus der Kondensator-Varistor-Kombination 703 erfolgt im angegebenen Beispiel mittels des spannungsbegrenzenden Varistors 704.

Es ist ebenfalls möglich, diese Funktion durch entsprechende Bemessung mindestens eines Energiespeichers bzgl. seiner maximalen Spannung und durch Ansteuerung der für die Modulation des Energieflusses in die Speicher eingefügten Schaltelemente darzustellen; in so einem Fall könnte der in Fig.7 gezeigte Pufferzweig sowie die Schaltung zur Vorladung entfallen.

Hinsichtlich der weiteren Eigenschaften der Schaltungsanordnung gemäß Fig.7 wird auf die vorstehenden Erläuterungen verwiesen.

### Weitere Vorteile:

Der hier vorgestellte Ansatz ermöglicht es, Fahrzeuge mit hoher elektrischer Leistung im Antriebsstrang als auch mit einer großen auf elektrischer Energie beruhenden Reichweite auszustatten. Hierbei kann insbesondere im Hinblick auf beide Zielgrößen (elektrische Leistung im Antriebsstrang und Reichweite) ein z.B. für ein bestimmtes Anforderungsprofile optimaler Wirkungsgrad erreicht bzw. eingestellt werden.

Dieser Ansatz kann bei Hybridfahrzeugen auf Basis bekannter elektrischer Speicher (z.B. SuperCap, Lithium-Ionen-Batterie, Nickelmetallhydrid-Batterie) als auch in Kombination mit alternativen elektrischen Energiequellen (z.B. Brennstoffzelle) eingesetzt werden.

Durch die Entkopplung von Energie- und Leistungsanforderung für die elektrischen Speicher bzw. die elektrischen Energiequellen wird eine ökonomische Dimensionierung der elektrischen Speicher bzw. elektrischen Energiequellen bei gleichzeitig hoher Lebensdauer erreicht.

Weiterhin zeigt das System eine hohe Redundanz: Bei einem Ausfall einer Energiequelle kann eine andere Energiequelle einen Notbetrieb übernehmen.

Durch die gute Regelbarkeit der Leistungsaufteilung zwischen den verschiedenen Energiequellen kann eine Betriebsstrategie des Fahrzeugs komfortabel erreicht und eingestellt werden.

Die thermische Belastung der Energiequellen wird aufgrund der Anpassung der geforderten Leistung an den jeweiligen optimalen Betriebspunkt der Energiequelle deutlich reduziert. Der Aufwand für die Kühlung von Traktionsbatterien kann hierbei erheblich verringert werden. Beispielsweise kann im Fall der Kombination von SuperCap und Batterie auf die Kühlung der Batterie verzichtet werden.

Die angegebene Einrichtung zur Verknüpfung verschiedener elektrischer Energiespeicher ist sowohl bzgl. der Hardware als auch bzgl. der Software in vorhandene elektrifizierte Fahrzeugen implementierbar. Insbesondere lassen sich die üblichen Elektromaschinen und deren zugehörigen Regelungskonzepte weiterverwenden.

Die variable Aufteilung zwischen Reichweitenanforderung und Leistungsanforderung auf unterschiedliche Energiequellen gestattet bei geringem Aufwand eine entsprechend variable Auslegung von Form und Größe der Energiequellen und damit ein anforderungsgenaues Design verschiedener Hybridausprägungen, z.B.:
(a) Hybridfahrzeuge mit RangeExtender: Die elektrische Reichweite wird mit einer zusätzlichen elektrischen Energiequelle vergrößert. Die elektrische Reichweite des Fahrzeuges kann als Montagevariante unabhängig von der abrufbaren Leistung an den Kundenwunsch angepasst werden.
(b) Hybridfahrzeuge mit PowerBooster: Starke Anfahrbeschleunigung mittels elektrischer Fahrt und damit kultivierter elektrischer Ausgleich von Turbolöchern o.ä. kann mittels einer zusätzlichen elektrischen Energiequelle erreicht werden. Die verfügbare elektrische Leistung kann somit als Montagevariante unabhängig von der elektrischen Reichweite des Fahrzeuges an den Kundenwunsch angepasst werden.

Weiterhin wird durch den vorliegenden Ansatz die Sicherheit und Effizienz von Hybridantrieben verbessert.

Für die Auslegung des elektrischen Antriebes steht ein neuer Freiheitsgrad zur Verfügung, da die maximal zulässige Leerlaufspannung der Elektromaschine unabhängig von der maximalen Leerlaufspannung der Energiequellen ist.

Der vorgestellte Ansatz kann auch für kleine elektrische Antriebe, z.B. Starter, Generatoren bzw. Startergeneratoren verwendet werden und ist auch für den Einsatz in kleinen und leichten Fahrzeugen (z.B. in Motorrädern) geeignet.

### Elektrischer Antrieb mit mehreren elektrischen Energiequellen (und/oder elektrischen Energiespeichern):

Weiterhin kann der nachfolgende Ansatz helfen, einen hohen Aufwand an Symmetrierelementen für die elektrischen Speicher zu vermeiden und bei paralleler Nutzung mehrerer Speicher hohe Spannungen bereitzustellen.

Diesbezüglich können mindestens zwei elektrische Energiequellen (oder Energiespeicher, Energienetze, Generatoren, etc.) zueinander in Reihe geschaltet sein.

Insbesondere wird vorgeschlagen, anhand der mindestens zwei elektrischen Energiequellen unterschiedliche Spannungsniveaus bereitzustellen. Dies wird auch als "Multi-Level-Ansatz" bezeichnet.

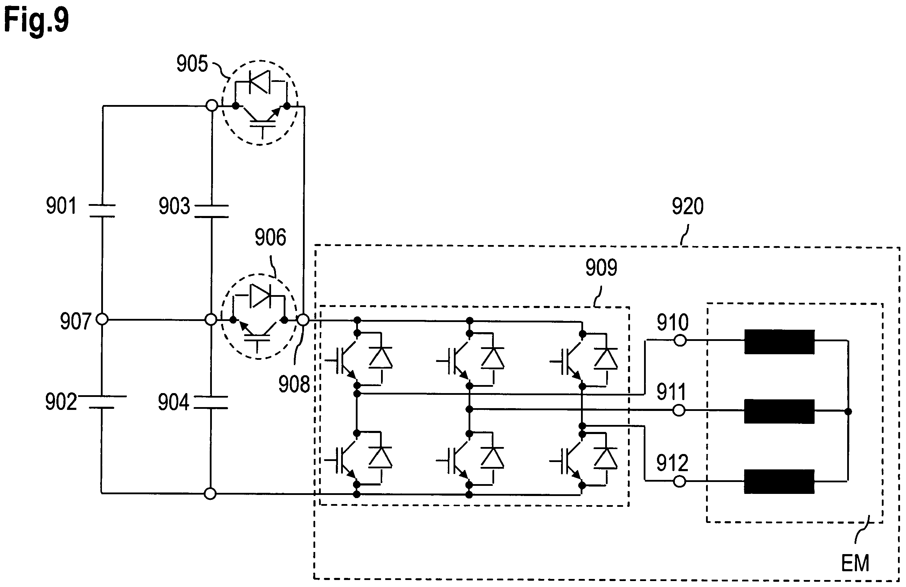

**Fig.9** zeigt ein Prinzipschaltbild für den Betrieb einer Elektromaschine EM mit mehreren Energiequellen (z.B. Energiespeichern) 901 und 902 für einen wahlweisen Betrieb der Energiequelle 902 oder beider Energiequellen 901 und 902. Vorteilhaft kann die Schaltung eingesetzt werden für Fälle, in denen der Energieinhalt der Energiequelle 902 größer als der Energieinhalt der Energiequelle 901 ist. Insbesondere kann die Energiequelle 901 als ein Kondensator und die Energiequelle 902 als eine Batterie ausgeführt sein.

Die Energiequellen 901 und 902 sind miteinander in Reihe geschaltet. Der Mittenabgriff dieser Reihenschaltung entspricht einem Knoten 907. Parallel zu der Energiequelle 901 ist ein Filter 903 und parallel zu der Energiequelle 904 ist ein Filter 904 angeordnet. Die Filter 903 und 904 sind vorzugsweise als Kondensatoren ausgeführt.

Der positive Pol der Energiequelle 901 ist weiterhin über einen Schalter 905 mit einem Knoten 908 verbunden. Der Schalter 905 umfasst einen IGBT mit einer entgegen die Kollektor-Emitter-Strecke angeordneten Freilaufdiode. Die Kollektor-Emitter-Strecke des Schalters 905 zeigt in Richtung des Knotens 908.

Der Schalter 905 mit Freilaufdiode ermöglicht einerseits einen Freilauf zwischen der Elektromaschine EM und den Energiequellen 901 und 902 und andererseits eine Schaltfunktion für die Energieeinspeisung aus den Energiequellen 901 und 902 in die Elektromaschine EM.

Zwischen dem Knoten 907 und dem Knoten 908 ist ein Schalter 906 angeordnet. Der Schalter 906 umfasst einen IGBT mit einer entgegen die Kollektor-Emitter-Strecke angeordneten Freilaufdiode. Die Kollektor-Emitter-Strecke des Schalters 906 zeigt in Richtung des Knotens 907.

Der Schalter 906 mit Freilaufdiode unterbricht bei Bedarf den Energiefluss zwischen der Elektromaschine EM und der Energiequelle 902.

Weiterhin zeigt Fig.9 einen Wechselrichter 909, der entsprechend dem Wechselrichter 101 aus Fig.1 aufgebaut sein kann und ausgangsseitig über drei Mittenabgriffe der elektrischen Schalter mit Knoten 910 bis 912 verbunden ist. An je einem der Knoten 910 bis 912 ist eine Spule der Elektromaschine EM angeordnet.

Der Knoten 908 und der negative Pol der Energiequelle 902 sind mit dem Wechselrichter 909 verbunden.

Hierbei sei angemerkt, dass die Kombination aus Wechselrichter 909 und elektrischer Maschine gemäß der Darstellung in Fig.9 auch in nachfolgenden Figuren eingesetzt wird und der Übersicht halber als eine Einheit 920 bezeichnet wird.

Die beiden Energiequellen 901 und 902 stellen bidirektional belastbare Speicher dar. Die Energiequelle 902 kann über den Wechselrichter 909 sowohl einzeln als auch zusammen mit der Energiequelle 901 belastet werden.

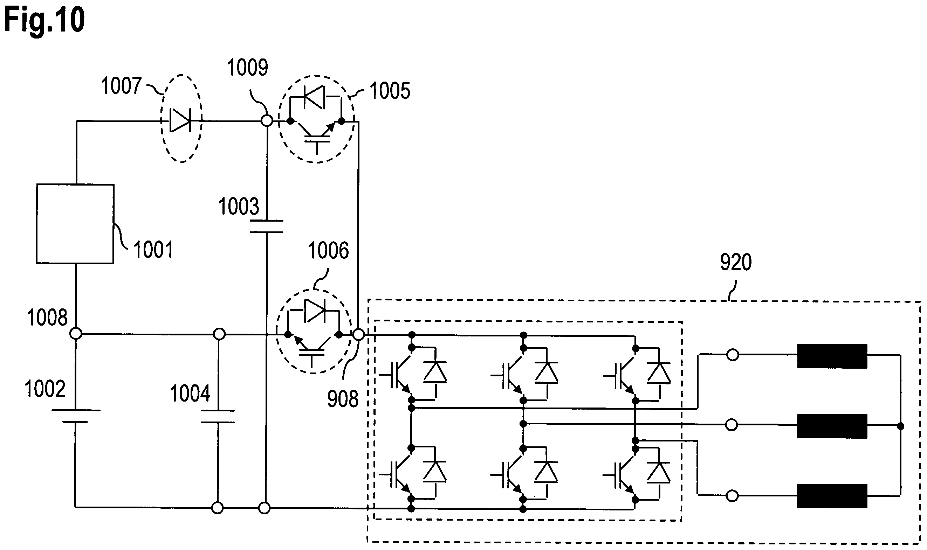

**Fig.10** zeigt ein Prinzipschaltbild für den Betrieb einer Elektromaschine EM mit mehreren Energiequellen, wobei beispielhaft eine Energiequelle als eine monodirektionale Energiequelle (Senke) ausgeführt ist.

Eine Reihenschaltung weist eine monodirektionale Quelle 1001 und eine Energiequelle 1002 (z.B. eine Batterie) auf. Der Mittenabgriff der Reihenschaltung wird als Knoten 1008 bezeichnet. Parallel zu der Energiequelle 1002 ist ein Filter 1004 angeordnet, das vorzugsweise als Kondensator ausgeführt ist.

Der positive Pol der Quelle 1001 ist über eine Diode 1007 mit einem Knoten 1009 verbunden. Die Kathode der Diode 1007 zeigt in Richtung des Knotens 1009. Somit verhindert die Diode 1007 einen Energierückfluss in die Quelle 1001.

Ein Filter 1003 ist einerseits mit dem Knoten 1009 und andererseits mit dem negativen Pol der Energiequelle 1002 verbunden. Das Filter 1003 ist vorzugsweise als ein Kondensator ausgeführt.

Ein Schalter 1005 ist zwischen dem Knoten 1009 und einem Knoten 908 vorgesehen. Der Schalter 1005 umfasst einen IGBT mit einer entgegen die Kollektor-Emitter-Strecke angeordneten Freilaufdiode. Die Kollektor-Emitter-Strecke des Schalters 1005 zeigt in Richtung des Knotens 908.

Der Schalter 1005 mit Freilaufdiode ermöglicht einerseits einen Freilauf zwischen der Elektromaschine EM und der Quelle 1001 und dem Filter 1003 und anderseits eine Schaltfunktion für die Energieeinspeisung aus den Energiequellen 1001 und 1002 in die Elektromaschine EM.

Zwischen dem Knoten 1008 und dem Knoten 908 ist ein Schalter 1006 angeordnet. Der Schalter 1006 umfasst einen IGBT mit einer entgegen die Kollektor-Emitter-Strecke angeordneten Freilaufdiode. Die Kollektor-Emitter-Strecke des Schalters 1006 zeigt in Richtung des Knotens 1008.

Der Schalter 1006 mit Freilaufdiode unterbricht bei Bedarf den Energiefluss zwischen der Elektromaschine EM und der Energiequelle 1002.

Weiterhin zeigt Fig. 10 die Einheit 920 aus Wechselrichter und elektrischer Maschine gemäß Fig.9. Der Knoten 908 und der negative Pol der Energiequelle 1002 sind mit der Einheit 920 verbunden.

Gemäß dem Beispiel aus Fig.10 wird die Quelle 1001 lediglich mit einer Entnahme elektrischer Energie belastet, wohingegen die Energiequelle 1002 sowohl Energie abgeben als auch aufnehmen kann. In jedem Schaltzustand ist mittels der Filter 1003, 1004 ein kurzfristiger Energierückfluss aus der Elektromaschine EM möglich.

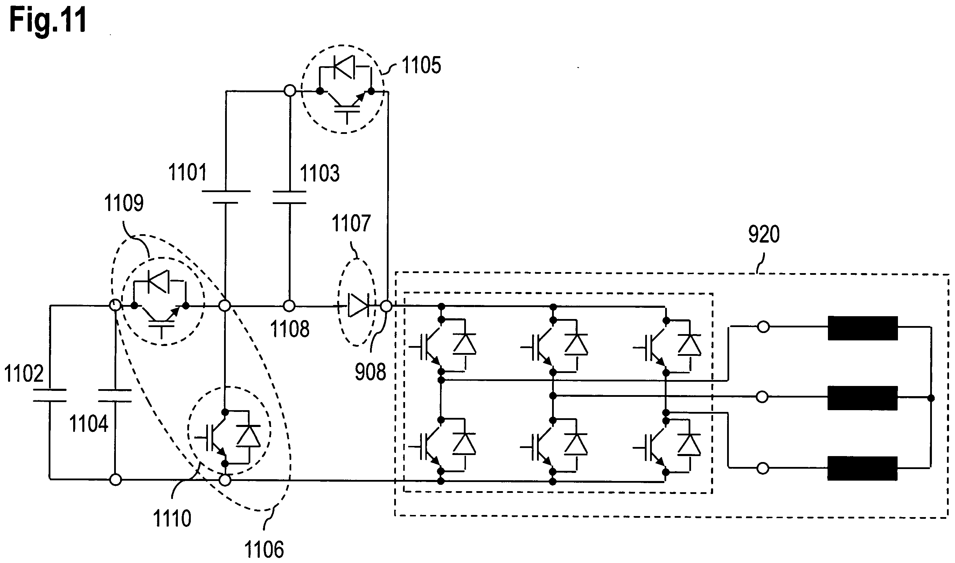

**Fig.11** zeigt ein Prinzipschaltbild für den Betrieb einer Elektromaschine EM mit mehreren Energiequellen, wobei zwischen beiden Energiequellen umgeschaltet werden kann.

Parallel zu einer Energiequelle 1101 ist ein Filter 1103 vorgesehen, das vorzugweise in Form eines Kondensators ausgestaltet ist. Der positive Pol der Energiequelle 1101 ist über einen Schalter 1105 mit einem Knoten 908 verbunden und der negative Pol der Energiequelle 1101 ist mit einem Knoten 1108 verbunden. Zwischen dem Knoten 1108 und dem Knoten 908 ist eine Diode 1107 vorgesehen, deren Kathode in Richtung des Knotens 908 zeigt. Die Diode 1107 verhindert einen Kurzschluss über die Energiequelle 1101.

Der Schalter 1105 umfasst einen IGBT mit einer entgegen die Kollektor-Emitter-Strecke angeordneten Freilaufdiode. Die Kollektor-Emitter-Strecke des Schalters 1105 zeigt in Richtung des Knotens 908.

Der Schalter 1105 mit Freilaufdiode ermöglicht einerseits eine Energiespeisung aus der Energiequelle 1101 in die Elektromaschine EM und anderseits wird ein Freilauf für einen Energierückfluss aus der Elektromaschine in die Energiequelle 1101 ermöglicht.

Eine Energiequelle 1102 ist mittels ihres positiven Pols über einen Schalter 1109 mit dem Knoten 1108 verbunden. Parallel zu der Energiequelle 1102 ist ein Filter 1104 vorgesehen, das vorzugsweise als Kondensator ausgeführt ist. Weiterhin ist zwischen dem Knoten 1108 und dem negativen Pol der Energiequelle 1102 ein Schalter 1110 angeordnet.

Der Schalter 1109 umfasst einen IGBT mit einer entgegen die Kollektor-Emitter-Strecke angeordneten Freilaufdiode. Die Kollektor-Emitter-Strecke des Schalters 1109 zeigt in Richtung des Knotens 1108.

Der Schalter 1110 umfasst einen IGBT mit einer entgegen die Kollektor-Emitter-Strecke angeordneten Freilaufdiode. Die Kollektor-Emitter-Strecke des Schalters 1110 zeigt in Richtung des negativen Pols der Energiequelle 1102. Optional kann der Schalter 1110 in Form des IGBTs oder der Freilaufdiode ausgeführt sein.

Die Kombination 1106 aus den Schaltern 1109 und 1110 stellt einen Wechselschalter für die Überbrückung der Energiequelle 1102 dar. Der zugehörige Freilauf stellt sicher, dass ein Energierückfluss aus der Elektromaschine EM möglich ist. Wird bei dem Schalter 1110 der IGBT oder die Diode weggelassen, so ist ein singulärer Betrieb der Energiequelle 1101 nur in einer Energieflussrichtung möglich.

Entsprechend kann jedwede Energieflussrichtung mittels geeignet gewählter Schalter eingestellt bzw. voreingestellt werden. Dadurch können unterschiedliche Typen von Energiequellen, insbesondere Energiequellen für andere Einsatzgebiete, die in der vorliegenden Schaltung lediglich als Energiesenken fungieren, geeignet unterstützt werden.

Weiterhin zeigt Fig.11 die Einheit 920 aus Wechselrichter und elektrischer Maschine gemäß Fig.9. Der Knoten 908 und der negative Pol der Energiequelle 1102 sind mit der Einheit 920 verbunden.

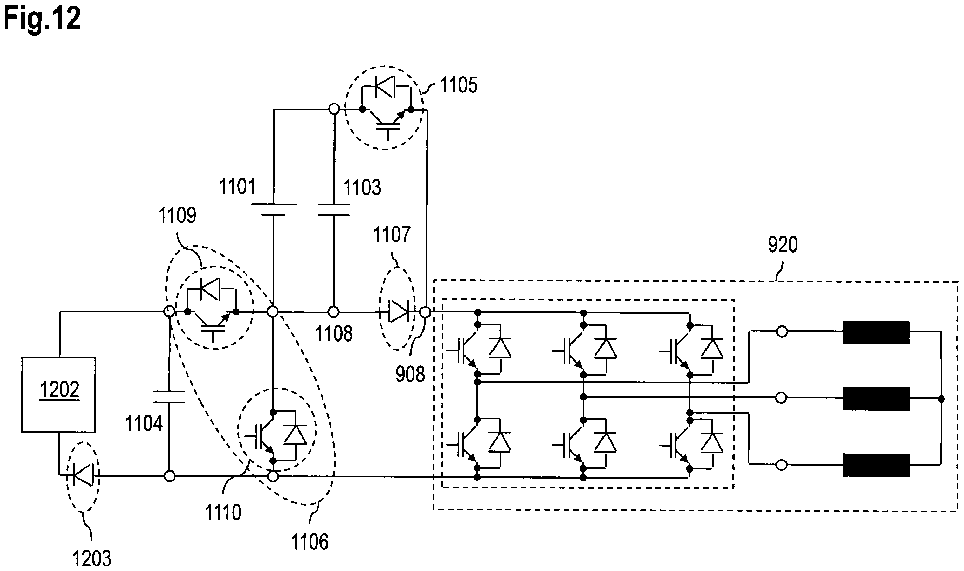

Fig.12 zeigt ein Prinzipschaltbild, das weitgehend der Darstellung von Fig.11 entspricht. Diesbezüglich wird auf die vorstehenden Ausführungen verwiesen. Anstatt der Energiequelle 1102 ist in Fig.12 eine Reihenschaltung aus einer Quelle 1202 und einer Diode 1203 vorgesehen, wobei die Kathode der Diode 1203 mit dem negativen Pol der Quelle 1202 und die Anode der Diode 1203 mit der Einheit 920 verbunden ist.

Der Schalter 1005 mit Freilaufdiode ermöglicht einerseits eine Energiespeisung aus der Energiequelle 1101 in die Elektromaschine EM und anderseits wird ein Freilauf für einen Energierückfluss aus der Elektromaschine in die Energiequelle 1101 ermöglicht.

Der Wechselschalter 1106 stellt eine Überbrückung der Quelle 1202 bei der Energierückspeisung sicher. Auch ermöglicht der Wechselschalter 1106 einen Freilauf für den Energierückfluss aus der Elektromaschine EM. Wird bei dem Schalter 1110 die Diode weggelassen, so ist ein singulärer Betrieb der Energiequelle 1101 nur bei einer Rückspeisung aus der Elektromaschine EM möglich.

Die Figuren 11 und 12 zeigen somit für beispielhafte Energiequellen mögliche Betriebsmodi an DC-Anschlüssen des Wechselrichters.

Eine Umschaltung aller zusätzlichen Schaltelemente kann wie vorstehend beschrieben zu jedem Zeitpunkt und vorzugsweise mit einer zum Wechselrichterpuls vergleichbaren Taktfrequenz erfolgen.

Der hier vorgestellte Ansatz kann unterschiedliche Anzahlen von Energiequellen (z.B. Energiespeicher, Quellen oder Senken) nutzen. Insbesondere kann es sich bei der genannten Energiequelle auch um eine Energiesenke handeln (in diesem Fall kann z.B. die Senke als eine Energiequelle für einen anderen Verbraucher einsetzbar sein).

Vorteilhaft wird bei der Strombelastbarkeit der einzelnen Elemente berücksichtigt, dass diese vorzeichenbehaftet sowohl für momentane Werte als auch für eine zeitliche Belastung aufeinander abgestimmt sind. Dies gilt besonders beim Betrieb der in Reihe geschalteten Energiequellen.

Somit kann der Aufwand für Speichersysteme mit mehreren Energiespeichern weiter minimiert werden. Insbesondere addieren sich bei den Schaltungen mit in Reihenschaltung angeordneten Energiequellen deren Spannungen, so dass z.B. bei gestackten Energiequellen (z.B. Batterien, Supercaps, Brennstoffzellen, Solarpanels, thermoelektrische Generatoren) der Aufwand für eine Symmetrierung des Zellverbundes bzw. der Regelung der einzelnen optimierten Betriebspunkte erheblich reduziert werden kann.

Ein Ankerstellbereich der Elektromaschine kann auf die Summe der Spannungen der in Reihe geschalteten Speicherelemente ausgelegt werden. Dadurch lässt sich ein zumindest temporär vergrößerter Arbeitsbereich des elektrischen Antriebssystems erreichen.

## Patentansprüche

1. Schaltungsanordnung zur Versorgung eines elektrischen Antriebs (EM),
- an die mindestens zwei elektrische Energiequellen (BAT, BZ, SC) anschließbar sind;
- bei der mindestens eine der mindestens zwei elektrischen Energiequellen mittels mindestens eines Stellglieds (101; 201; 302, 303; 412; 802, 803) zumindest zeitweise den elektrischen Antrieb (EM) versorgt;
- bei der mindestens eine elektrische Energiequelle, die eine Batterie umfaßt, mittels eines Schalters (204a, 204b; 305; 404, 405; 504; 605, 606; 714, 715, 716; 905, 906; 1005, 1006; 1105, 1106) von dem elektrischen Antrieb (EM) trennbar ist; wobei zwischen dem Schalter und dem Stellglied kein weiterer als Spannungsquelle wirkender Energiespeicher geschaltet ist;
**gekennzeichnet durch** zumindest einen Filter (104, 105; 206; 307, 308; 603, 604; 807, 808) und eine Vorladeschaltung (106; 407; 315; 815), die die Batterie und die Kondensatorquelle koppelt, und **gekennzeichnet dadurch, daß** der Schalter zwischen Filter und Stellglied geschaltet ist, und die mindestens eine elektrische Energiequelle eine Kondensatorquelle umfaßt.

2. Schaltungsanordnung nach Anspruch 1, bei der der Schalter (204a, 204b; 305; 404, 405; 504; 605, 606; 714, 715, 716;905, 906; 1005, 1006; 1105, 1106) ungesteuert ausgeführt ist und insbesondere eine Diode (103) umfasst.

3. Schaltungsanordnung nach Anspruch 1, bei der der Schalter (204a, 204b; 305; 404, 405; 504; 605, 606; 714, 715, 716;905, 906; 1005, 1006; 1105, 1106) ein gesteuerter Schalter ist umfassend mindestens eines der folgenden Bauteile:
- einen Transistor;
- einen IGBT;
- einen FET, insbesondere ein MOSFET;
- einen Thyristor;
- einen Triac;
- einen Dynistor.

4. Schaltungsanordnung nach einem der vorhergehenden Ansprüche, bei der mindestens diejenige elektrische Energiequelle mittels des Schalters von dem elektrischen Antrieb trennbar ist, die eine gegenüber den anderen Energiequellen geringere Gleichspannung aufweist.

5. Schaltungsanordnung nach einem der vorhergehenden Ansprüche, bei der der elektrische Antrieb eine Elektromaschine umfasst.

6. Schaltungsanordnung nach einem der vorhergehenden Ansprüche, bei der die mindestens zwei elektrischen Energiequellen mit der Schaltungsanordnung in einem Kraftfahrzeug angeordnet sind.

7. Schaltungsanordnung nach einem der vorhergehenden Ansprüche, bei der die elektrische Energiequelle eine der folgenden Energiequellen umfasst:
- eine Brennstoffzelle;
- eine Doppelschichtkondensatorquelle.

8. Schaltungsanordnung nach einem der vorhergehenden Ansprüche, bei der das Stellglied eine Wechselrichterbrücke (101, 102; 201, 202; 302, 303; 412; 802, 803; 909) umfasst.

9. Schaltungsanordnung nach Anspruch 8, bei der für jede elektrische Energiequelle eine Wechselrichterbrücke vorgesehen ist.

10. Schaltungsanordnung nach einem der Ansprüche 8 oder 9, bei der die Wechselrichterbrücke dreiphasig ausgeführt ist.

11. Schaltungsanordnung nach einem der vorhergehenden Ansprüche, bei der ein Puffer (402; 501; 601; 703) vorgesehen ist zur Aufnahme und/oder Bereitstellung elektrischer Energie.

12. Schaltungsanordnung nach Anspruch 11, bei der der Puffer eine Spannung aufweist, die im wesentlichen mindestens so groß ist wie die größte Spannung, insbesondere die größte Leerlaufspannung, der elektrischen Energiequellen.

13. Schaltungsanordnung nach einem der Ansprüche 11 oder 12, bei der der Puffer eine Spannung aufweist, die im wesentlichen mindestens so groß ist wie die maximale Spannung an dem elektrischen Antrieb.

14. Schaltungsanordnung nach einem der Ansprüche 11 bis 13, bei der der Puffer derart ausgelegt ist, dass er eine in dem elektrischen Antrieb induktiv gespeicherte Energie periodisch aufnimmt und entweder an den elektrischen Antrieb oder an einen anderen Verbraucher abgibt.

15. Schaltungsanordnung nach einem der vorhergehenden Ansprüche, bei der mindestens zwei elektrische Energiequellen in Reihe geschaltet sind.

16. Schaltungsanordnung nach Anspruch 15, bei der die mindestens zwei in Reihe geschalteten elektrischen Energiequellen einzeln oder zusammen aktivierbar sind.

17. Schaltungsanordnung nach Anspruch 16, bei der die mindestens zwei in Reihe geschalteten elektrischen Energiequellen mittels mindestens eines elektronischen Schalters einzeln oder zusammen aktivierbar sind.

18. Schaltungsanordnung nach einem der Ansprüche 15 bis 17, bei der ein Wechselschalter vorgesehen ist, anhand dessen zwischen elektrischen Energiequellen umgeschaltet werden kann.

19. Schaltungsanordnung nach einem der vorhergehenden Ansprüche, bei der mindestens eine elektrische Energiequelle eine monodirektionale Energiequelle ist.

20. Schaltungsanordnung nach einem der vorhergehenden Ansprüche, bei der die mindestens zwei elektrischen Energiequellen unterschiedliche Spannungen und/oder unterschiedliche Leistungen aufweisen.

21. Kraftfahrzeug umfassend mindestens einen elektrischen Antrieb und mindestens zwei elektrische Energiequellen sowie die Schaltungsanordnung gemäß einem der Ansprüche 1 bis 20.

## Claims

1. A circuit arrangement for supplying an electric drive (EM),
- to which at least two electrical energy sources (BAT, BZ, SC) can be connected;
- in which at least one of the at least two electrical energy sources supplies the electric drive (EM) at least temporarily by means of at least one actuator(101; 201; 302, 303; 412; 802, 803);
- in which at least one electrical energy source, which comprises a battery, can be separated from the electric drive (EM) by means of a switch (204a, 204b; 305; 404, 405; 504; 605, 606; 714, 715, 716; 905, 906; 1005, 1006; 1105, 1106);
wherein no further energy store acting as voltage source is connected between the switch and the actuator;
**characterised by** at least one filter (104, 105; 206; 307, 308; 603, 604; 807, 808) and a precharging circuit(106; 407; 315; 815), which couples the battery and the capacitor source, and **characterised in that**
the switch is connected between the filter and actuator, and
the at least one electrical energy source comprises a capacitor source.

2. A circuit arrangement according to claim 1, in which the switch (204a, 204b; 305; 404, 405; 504; 605, 606; 714, 715, 716; 905, 906; 1005, 1006; 1105, 1106) is designed as an uncontrolled switch and in particular comprises a diode (103).

3. A circuit arrangement according to claim 1, in which the switch (204a, 204b; 305; 404, 405; 504; 605, 606; 714, 715, 716; 905, 906; 1005, 1006; 1105, 1106) is a controlled switch, comprising at least one of the following components:
- a transistor;
- an IGBT;
- a FET, in particular a MOSFET;
- a thyristor;
- a triac;
- a dynistor.

4. A circuit arrangement according to any one of the preceding claims, in which at least the electrical energy source that has a lower direct voltage compared to the other energy sources can be disconnected from the electric drive by means of the switch.

5. A circuit arrangement according to any one of the preceding claims, in which the electric drive is an electric machine.

6. A circuit arrangement according to any one of the preceding claims, in which the at least two electrical energy sources are arranged with the circuit arrangement in a motor vehicle.

7. A circuit arrangement according to any one of the preceding claims, in which the electrical energy source comprises one of the following energy sources:
- a fuel cell;
- a double-layer capacitor source.

8. A circuit arrangement according to any one of the preceding claims, in which the actuator comprises an inverter bridge (101, 102; 201, 202; 302, 303; 412; 802, 803; 909).

9. A circuit arrangement according to claim 8, in which an inverter bridge is provided for each electrical energy source.

10. A circuit arrangement according to either one of claims 8 or 9, in which the inverter bridge is three-phase.

11. A circuit arrangement according to any one of the preceding claims, in which a buffer (402; 501; 601; 703) is provided for receiving and/or providing electrical energy.

12. A circuit arrangement according to claim 11, in which the buffer has a voltage that is substantially at leastas greatas the greatestvoltage, more especially the greatest open-circuit voltage, of the electrical energy sources.

13. A circuit arrangement according to either one of claims 11 or 12, in which the buffer has a voltage that is substantially at least as great as the maximum voltage at the electric drive.

14. A circuit arrangement according to any one of claims 11 to 13, in which the buffer is designed in such a way that it periodically receives an energy stored inductively in the electric drive and delivers it either to the electric drive or to another consumer.

15. A circuit arrangement according to any one of the preceding claims, in which at least two electrical energy sources are connected in series.

16. A circuit arrangement according to claim 15, in which the at leasttwo electrical energy sources connected in series can be activated individually or together.

17. A circuit arrangement according to claim 16, in which the at least two electrical energy sources connected in series can be activated individually or together by means of at least one electronic switch.

18. A circuit arrangement according to any one of claims 15 to 17, in which a changeover switch is provided, by means of which it is possible to switch between electrical energy sources.

19. A circuit arrangement according to any one of the preceding claims, in which at least one electrical energy source is a monodirectional energy source.

20. A circuit arrangement according to any one of the preceding claims, in which the at least two electrical energy sources have different voltages and/or different powers.

21. A motorvehicle comprising at least one electric drive and at least two electrical energy sources and the circuit arrangement according to any one of claims 1 to 20.

## Revendications

1. Dispositif de commutation permettant d'alimenter un entraînement électrique (EM),
- sur lequel peuvent être connectées au moins deux sources d'énergie électrique (BAT, BZ, SC),
- dans lequel au moins l'une des sources d'énergie électrique alimente au moins par intermittence l'entraînement électrique (EM) au moyen d'au moins un organe de réglage (101 ; 201 ; 302, 303 ; 412 ; 802, 803),
- dans lequel cette source d'énergie électrique qui comporte une batterie peut être isolée au moyen d'un commutateur (204a, 204b ; 305 ; 404, 405 ; 504 ; 605, 606 ; 714, 715, 716 : 905, 906 ; 1005, 1006 ; 1105, 1106) de l'entraînement électrique (EM),
entre le commutateur et l'organe de réglage n'étant branché aucun autre accumulateur d'énergie agissant en tant que source de tension,
**caractérisé par**
au moins un filtre (104, 105 ; 206 ; 307, 308 ; 603, 604 ; 807, 808) et un circuit de charge préalable (106 ; 407 ; 315 ; 815) qui couple la batterie et une source à condensateur,
le commutateur est branché entre le filtre et l'organe de réglage, et
la source d'énergie électrique renferme la source à condensateur.

2. Dispositif de commutation conforme à la revendication 1,
dans lequel le commutateur (204a, 204b ; 305 ; 404, 405 ; 504 ; 605, 606 ; 714, 715, 716 ; 905, 906; 1005, 1006; 1105, 1106) n'est pas commandé et renferme au moins une diode (103).

3. Dispositif de commutation conforme à la revendication 1,
dans lequel le commutateur (204a, 204b ; 305 ; 404, 405 ; 504 ; 605, 606 ; 714, 715, 716 ; 905, 906 ; 1005, 1006 ; 1105, 1106) est un commutateur commandé renfermant au moins l'un des composants suivants :
- un transistor,
- un IGBT,
- un FET, en particulier un MOSFET,
- un thyristor,
- un triac,
- un dynistor.

4. Dispositif de commutation conforme à l'une des revendications précédentes,
dans lequel au moins la source d'énergie électrique pouvant être isolée de l'entraînement électrique par le commutateur a, par rapport aux autres sources d'énergie, une tension continue plus faible.

5. Dispositif de commutation conforme à l'une des revendications précédentes,
dans lequel l'entraînement électrique comprend un moteur électrique.

6. Dispositif de commutation conforme à l'une des revendications précédentes,
dans lequel les deux sources d'énergie électrique sont montées dans un véhicule avec le dispositif de commutation.

7. Dispositif de commutation conforme à l'une des revendications précédentes,
dans lequel la source d'énergie électrique comprend l'une des sources d'énergie suivantes :
- une pile à combustible,
- une source à condensateur à double couche.

8. Dispositif de commutation conforme à l'une des revendications précédentes,
dans lequel l'organe de réglage comporte un pont onduleur (101, 102 ; 201, 202 ; 302, 303 ; 412 ; 802, 803 ; 909).

9. Dispositif de commutation conforme à la revendication 8,
dans lequel il est prévu un pont onduleur pour chaque source d'énergie électrique.

10. Dispositif de commutation conforme à l'une des revendications 8 et 9,
dans lequel le pont onduleur est triphasé.

11. Dispositif de commutation conforme à l'une des revendications précédentes,
dans lequel il est prévu un tampon (402 ; 501 ; 601 ; 703) permettant de recueillir et/ou de fournir de l'énergie électrique.

12. Dispositif de commutation conforme à la revendication 11,
dans lequel le tampon a une tension qui est essentiellement au moins égale à la plus grande tension, en particulier à la plus grande tension en marche à vide des sources d'énergie électrique.

13. Dispositif de commutation conforme à l'une des revendications 11 et 12,
dans lequel le tampon a une tension qui est essentiellement au moins égale à la tension maximum appliquée sur l'entraînement électrique.

14. Dispositif de commutation conforme à l'une des revendications 11 à 13,
dans lequel le tampon est réalisé de sorte qu'il recueille périodiquement l'énergie emmagasinée par induction dans l'entraînement électrique, et la délivre soit à l'entraînement électrique, soit à un autre consommateur.

15. Dispositif de commutation conforme à l'une des revendications précédentes,
dans lequel les deux sources d'énergie électrique sont montées en série.

16. Dispositif de commutation conforme à la revendication 15,
dans lequel les deux sources d'énergie électrique montées en série peuvent être activées indépendamment ou conjointement.

17. Dispositif de commutation conforme à la revendication 16,
dans lequel les deux sources d'énergie électrique montées en série peuvent être activées indépendamment ou conjointement au moyen d'au moins un commutateur électronique.

18. Dispositif de commutation conforme à l'une des revendications 15 à 17,
dans lequel il est prévu un commutateur inverseur permettant d'inverser les sources d'énergie électrique.

19. Dispositif de commutation conforme à l'une des revendications précédentes,
dans lequel au moins une source d'énergie électrique est une source d'énergie unidirectionnelle.

20. Dispositif de commutation conforme à l'une des revendications précédentes,
dans lequel les deux sources d'énergie électrique ont des tensions différentes et/ou des puissances différentes.

21. Véhicule comprenant au moins un entraînement électrique et au moins deux sources d'énergie électrique ainsi qu'un dispositif de commutation conforme à l'une des revendications 1 à 20.
